# EUROPEAN PATENT APPLICATION

(11) **EP 4 780 096 A1**
(43) Date of publication of application: **22.07.2026**
(21) Application number: 24886373.0
(22) Date of filing: 01.11.2024
(51) Int. Cl.: H04W 64/00, H04W 24/08, G01S 5/02, G01S 5/00, H04B 17/20, H04W 72/0453, H04L 5/00

(54) **METHOD AND APPARATUS FOR ESTIMATING UE LOCATION IN WIRELESS COMMUNICATION SYSTEM**

(30) Priority: 02.11.2023 KR 20230150196
(71) Applicant: Samsung Electronics Co., Ltd., Suwon-si, Gyeonggi-do 16677 (KR)
(72) Inventor: LEE, Taeseop, Suwon-si, Gyeonggi-do 16677 (KR); JIN, Seungri, Suwon-si, Gyeonggi-do 16677 (KR)
(74) Representative: Gulde & Partner
(86) International application number: PCT/KR2024/017090
(87) International publication number: WO 2025/095703

(57) **Abstract**

The disclosure relates to a 5G or 6G communication system for supporting a higher data transmission rate. According to an embodiment of the disclosure, a method performed by a terminal in a wireless communication system includes receiving a radio resource control (RRC) message including configuration information on a combination of aggregated sounding reference signal (SRS) resource sets; receiving a medium access control-control element (MAC CE) for activating or deactivating the aggregated SRS resource sets; and based on at least one aggregated SRS resource set activated by the MAC CE, transmitting an SRS for positioning. The MAC CE includes first information indicating the combination of the aggregated SRS resource sets and second information indicating an activated or deactivated state for each of the aggregated SRS resource sets.

## Description

### [Technical Field]

The disclosure relates to a wireless communication system. More particularly, the disclosure relates to a method and an apparatus for estimating a location of a user equipment (UE) by using aggregated UL-SRSs.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

An aspect of the disclosure is to provide an apparatus and a method capable of effectively providing a location estimation service for a UE in a wireless communication system.

### [Technical Solution]

According to an embodiment of the disclosure, a method performed by a terminal in a wireless communication system is provided. The method includes receiving a radio resource control (RRC) message including configuration information on a combination of aggregated sounding reference signal (SRS) resource sets; receiving a medium access control-control element (MAC CE) for activating or deactivating the aggregated SRS resource sets; and based on at least one aggregated SRS resource set activated by the MAC CE, transmitting an SRS for positioning. The MAC CE includes first information indicating the combination of the aggregated SRS resource sets and second information indicating an activated or deactivated state for each of the aggregated SRS resource sets.

According to an embodiment of the disclosure, a method performed by a base station in a wireless communication system is rpovided. The method includes transmitting an RRC message including configuration information on a combination of aggregated SRS resource sets; transmitting a MAC CE for activating or deactivating the aggregated SRS resource sets; and based on at least one aggregated SRS resource set activated by the MAC CE, receiving an SRS for positioning. The MAC CE includes first information indicating the combination of the aggregated SRS resource sets and second information indicating an activated or deactivated state for each of the aggregated SRS resource sets.

According to an embodiment of the disclosure, a terminal in a wireless communication system is provided. The terminal includes a transceiver and a controller. The controller is configured to receive, via the transceiver, an RRC message including configuration information on a combination of aggregated SRS resource sets, receive, via the transceiver, a MAC CE for activating or deactivating the aggregated SRS resource sets, and based on at least one aggregated SRS resource set activated by the MAC CE, transmit, via the transceiver, an SRS for positioning. The MAC CE includes first information indicating the combination of the aggregated SRS resource sets and second information indicating an activated or deactivated state for each of the aggregated SRS resource sets.

According to an embodiment of the disclosure, a base station in a wireless communication system is provided. The base station includes a transceiver and a controller. The controller is configured to transmit, via the transceiver, an RRC message including configuration information on a combination of aggregated SRS resource sets, transmit, via the transceiver, a MAC CE for activating or deactivating the aggregated SRS resource sets, and based on at least one aggregated SRS resource set activated by the MAC CE, receive, via the transceiver, an SRS for positioning. The MAC CE includes first information indicating the combination of the aggregated SRS resource sets and second information indicating an activated or deactivated state for each of the aggregated SRS resource sets.

### [Advantageous Effects]

The disclosure provides an apparatus and a method capable of effectively providing services in a wireless communication system.

### [Description of Drawings]

FIG. 1 illustrates a structure of an LTE system according to an embodiment of the disclosure.
FIG. 2 illustrates a radio protocol structure in LTE and NR systems according to an embodiment of the disclosure.
FIG. 3 illustrates a network architecture for providing a UE location service (LCS) in a next generation mobile communication system according to an embodiment of the disclosure.
FIG. 4 is a flowchart illustrating a process of performing LCS in a next-generation mobile communication system according to an embodiment of the disclosure.
FIG. 5 is a flowchart illustrating a process of exchanging LTE positioning protocol (LPP) messages between a UE and a location management function (LMF) according to an embodiment of the disclosure.
FIG. 6 illustrates a process of configuring sounding reference signal (SRS) transmission of the UE for location estimation according to an embodiment of the disclosure.
FIG. 7 illustrates a scenario of estimating a location of the UE, based on a UL-SRS transmitted by the UE according to an embodiment of the disclosure.
FIG. 8 illustrates a scenario in which different UL-SRSs transmitted through different carriers (or serving cells) are aggregated according to an embodiment of the disclosure.
FIG. 9 is a flowchart illustrating a signaling process for using the UL-SRS BW aggregation for location estimation of the UE according to an embodiment of the disclosure.
FIG. 10 illustrates UL-SRS configuration information elements included in the RRCReconfiguration message according to an embodiment of the disclosure.
FIG. 11 illustrates the configuration of aggregated UL-SRS resource sets according to an embodiment of the disclosure.
FIG. 12A illustrates an exemplified structure of the MAC CE used to activate or deactivate aggregated UL-SRS resource sets according to an embodiment of the disclosure.
FIG. 12B illustrates an exemplified structure of the MAC CE used to activate or deactivate aggregated UL-SRS resource sets according to an embodiment of the disclosure.
FIG. 12C illustrates an exemplified structure of the MAC CE used to activate or deactivate aggregated UL-SRS resource sets according to an embodiment of the disclosure.
FIG. 13 illustrates a UE device according to an embodiment of the disclosure.
FIG. 14 illustrates a base station device according to an embodiment of the disclosure.

### [Mode for Invention]

Hereinafter, embodiments of the disclosure will be described in detail with reference to the accompanying drawings. Also, in describing the disclosure, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions should be made based on content throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, higher signaling refers to a signal transfer scheme from a base station to a terminal via a downlink data channel of a physical layer, or from a terminal to a base station via an uplink data channel of a physical layer. The higher signaling may also be understood as radio resource control (RRC) signaling or a media access control (MAC) control element (CE).

In the following description of the disclosure, terms and names defined in the 3rd generation partnership project new radio (3GPP NR) or 3rd generation partnership project long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. However, the base station is not limited to the above examples.

In particular, the disclosure may be applied to 3GPP NR (5th generation mobile communication standards). In addition, the disclosure may be applied to intelligent services (e.g., smart homes, smart buildings, smart cities, smart cars or connected cars, healthcare, digital education, retail business, security and safety-related services, etc.), based on 5G communication technology and IoT-related technology. In the disclosure, the term "eNB" may be interchangeably used with the term "gNB" for the sake of descriptive convenience. That is, a base station described as "eNB" may refer to "gNB". Furthermore, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of things. Since the Internet of things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with very low latency (ultra-low latency) and high reliability (ultra-high reliability). For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and may also require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description of embodiments of the disclosure, LTE, LTE-A, LTE Pro, or 5G (or NR, next-generation mobile communication) systems will be described by way of example, but the embodiments of the disclosure may also be applied to other communication systems having similar backgrounds or channel types. Moreover, based on determinations by those skilled in the art, the embodiments of the disclosure may also be applied to other communication systems through some modifications without significantly departing from the scope of the disclosure.

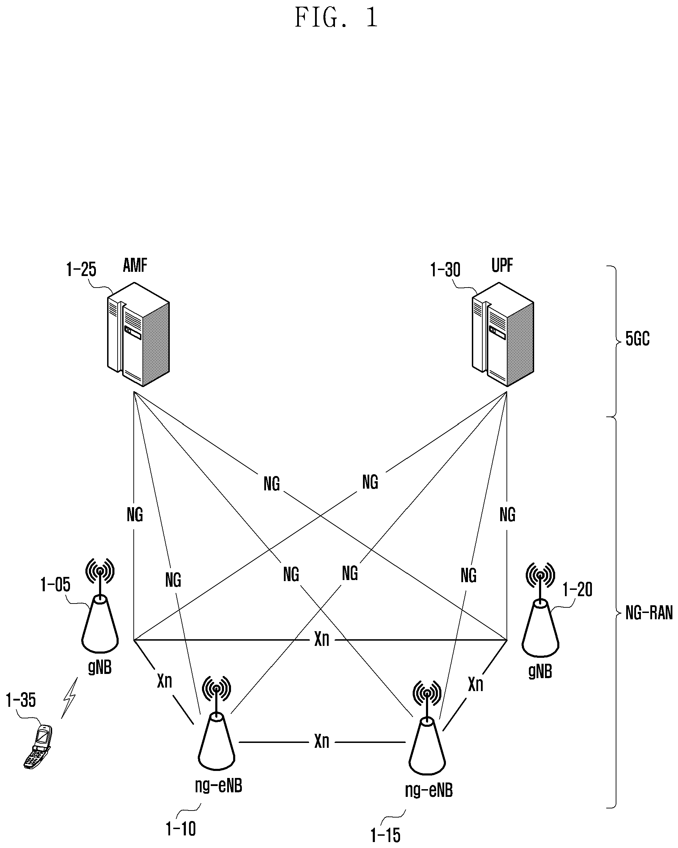

FIG. 1 illustrates a structure of an LTE system according to an embodiment of the disclosure.

Referring to FIG. 1, a wireless communication system may include multiple base stations (e.g., a gNB 1-05, an ng-eNB 1-10, an ng-eNB 1-15, and a gNB 1-20), an access and mobility management function (AMF) 1-25, and a user plane function (UPF) 1-30. The wireless communication system is not limited by the structure illustrated in FIG. 1, and may include a larger or smaller number of components than those of the structure in FIG. 1. A user equipment (hereinafter UE or terminal) 1-35 may access an external network through the base stations (e.g., the gNB 1-05, the ng-eNB 1-10, the ng-eNB 1-15, and the gNB 1-20) and the UPF 1-30.

In FIG. 1, the base stations (e.g., the gNB 1-05, the ng-eNB 1-10, the ng-eNB 1-15, and the gNB 1-20) may provide radio access to UEs accessing the network as cellular network access nodes. That is, in order to service users' traffic, the base stations (e.g., the gNB 1-05, the ng-eNB 1-10, the ng-eNB 1-15, and the gNB 1-20) may collect state information of UEs, such as the buffer states, available transmission power states, and channel states, and perform scheduling accordingly, thereby supporting connections between the UEs and the core network (CN; in particular, CN in NR is referred to as "5GC").

In FIG. 1, the gNBs 1-05 and 1-20 may control multiple cells and employ an adaptive modulation & coding (hereinafter referred to as AMC) scheme for determining a modulation scheme and a channel coding rate according to a channel state of a UE.

The core network is a device responsible for various control functions as well as a mobility management function for UEs, and may be connected to multiple base stations. Also, the 5GC may interwork with the conventional LTE system.

A wireless communication system may be divided into a user plane (UP) associated with actual user data transmission and a control plane (CP) such as connection management, the gNB 1-05 and gNB 1-20 may use UP and CP technology defined in the NR technology, and although connected to the 5GC, the ng-eNB 1-10 and ng-eNB 1-15 may use UP and CP technology defined in the long term evolution (LTE) technology.

The AMF 1-25 is a device responsible for various control functions as well as a mobility management function for a UE and may be connected to multiple base stations, and the UPF 1-30 may refer to a type of gateway device for providing data transmission. Although not illustrate in FIG. 1, the NR wireless communication system may include a session management function (SMF). The SMF may manage a packet data network connection, such as a protocol data unit (PDU) session, provided to the UE.

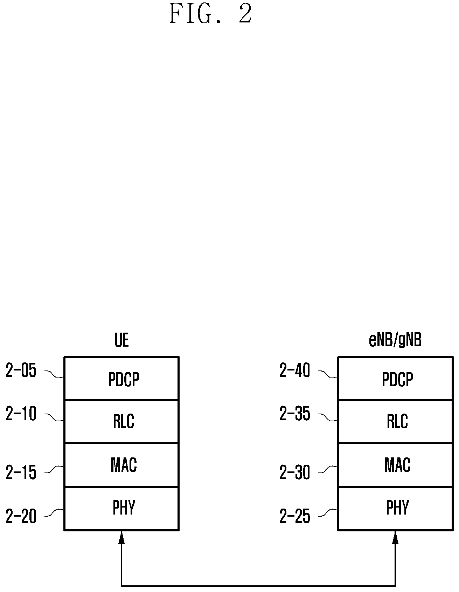

FIG. 2 illustrates a radio protocol structure in LTE and NR systems according to an embodiment of the disclosure.

Referring to FIG. 2, a radio protocol of an LTE system may include a packet data convergence protocol (PDCP) 2-05 or 2-40, a radio link control (RLC) 2-10 or 2-35, and a medium access control (MAC) 2-15 or 2-30 on each of UE and eNB sides.

The packet data convergence protocol (PDCP) 2-05 or 2-40 may be responsible for operations such as IP header compression/restoration. and may provide in-sequence or out-of-sequence delivery, reordering, duplicate detection, retransmission, or ciphering and deciphering functions. The functions of the PDCP are not limited to the above examples.

The radio link control (hereinafter RLC) 2-10 or 2-35 may reconfigure a PDCP protocol data unit (PDU) into appropriate sizes, and may provide in-sequence or out-of-sequence delivery, ARQ, concatenation, segmentation, reassembly, re-segmentation, reordering, duplicate detection, or error detection functions. The functions of the RLC are not limited to the above examples.

The MAC 215 or 230 is connected to several RLC layer devices configured in a single UE, and performs operations of multiplexing RLC PDUs into an MAC PDU and demultiplexing RLC PDUs from an MAC PDU. Also, the MAC may provide a mapping function, a scheduling information reporting function, an HARQ function, a priority handling function between logical channels, a priority handling function between UEs, an MBMS service identification function, a transport format selection function, and a padding function. The functions of the MAC are not limited to the above examples.

A physical (PHY) layer 2-20 or 2-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. For additional error correction, the PHY layer may also use hybrid ARQ (HARQ), and a receiving end may use one bit to transmit whether a packet transmitted by a transmitting end is received. This is referred to as HARQ AQCK/NACK information. In the case of LTE, downlink HARQ ACK/NACK information in response to uplink data transmission may be transmitted via a physical ARQ indicator channel (PHICH), and in the case of NR, since asynchronous HARQ is applied, whether retransmission is required or new transmission has only to be performed may be determined through UE scheduling information via a physical dedicated control channel (PDCCH) that is a channel via which downlink/uplink resource allocation and the like are transmitted. Uplink HARQ ACK/NACK information in response to downlink data transmission may be transmitted through a physical uplink control channel (PUCCH) or through a physical uplink shared channel (PUSCH). The PUCCH is generally transmitted in an uplink of a PCell as described below, but if supported by a UE, a base station may also additionally transmit the same to the corresponding UE in an SCell as described below, which is referred to as a PUCCH SCell.

Although not illustrated in the drawing, a radio resource control (RRC) layer may exist as a higher layer than each PDCP layer of the UE and the base station, and the RRC layer may exchange access/measurement-related configuration control messages for radio resource control.

The PHY layer may include one or multiple frequencies/carriers, and a technology for simultaneously configuring and using multiple frequencies is referred to as carrier aggregation (hereinafter CA). The CA refers to a technology in which, instead of using only one carrier for communication between a UE and an E-UTRAN node B (eNB), one primary carrier and multiple secondary carriers are additionally used and thus data capacity may be greatly increased as much as the number of secondary carriers. In the LTE and NR systems, a cell in a base station, which uses the primary carrier, may be referred to as a primary cell or PCell, and a cell in a base station, which uses the secondary carrier, may be referred to as a secondary cell or SCell.

Also, although not illustrated in the drawing, the radio protocol of NR may further include a service data adaptation (SDAP). The SDAP may provide functions of delivering user plane data, mapping a QoS flow and a data bearer for both uplink and downlink, and mapping a reflective QoS flow to a data bearer for uplink SDAP PDUs. The functions of the SDAP are not limited to the above examples.

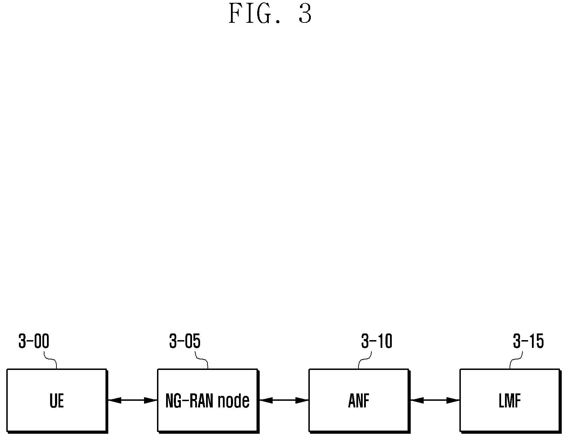

FIG. 3 illustrates a network structure for providing a UE location estimation service (LoCation Services (LCS)) in a wireless communication system according to an embodiment of the disclosure.

Referring to FIG. 3, in a mobile communication system, a network for providing an LCS may include a UE 3-00, an NG-RAN Node 3-05, an access and mobility function (AMF) 3-10, and a location management function (LMF) 3-15. At this time, the UE 3-00 may communicate with the LMF 3-15 through the NG-RAN node 3-05 and the AMF 3-10 to transmit/receive information necessary for location estimation. The role of each entity for providing the LCS may be, for example, as follows.

The UE 3-00 may serve to measure a radio signal required for location estimation and transfer a result to the LMF 3-15.

The NG-RAN node 3-05 may serve to transmit a downlink radio signal required for location estimation and measure an uplink radio signal transmitted by a target UE.

The AMF 3-10 may serve to receive an LCS request message from an LCS requester and then transfer the LCS request message to the LMF 3-15, so as to indicate provision of the location provision service. When the LMF 3-15 processes the location estimation request and then responds to the UE with a location estimation result, the AMF 3-10 may transfer the corresponding result to the LCS requester.

The LMF 3-15 may receive the LCS request from the AMF 3-10 to process the LCS request and may serve to control the overall processes required for location estimation. In order to estimate the UE location, the LMF 3-15 may provide the UE 3-00 with auxiliary information necessary for location estimation and signal measurement, and may receive a location estimation result and a location estimation signal measurement result value. At this time, an LTE positioning protocol (LPP) may be used as a protocol for data exchange. The LPP may define specifications of messages exchanged between the UE 3-00 and the LMF 3-15 for the location estimation service. Further, the LMF 3-15 may transmit and receive downlink reference signal (positioning reference signal (PRS)) configuration information and uplink reference signal (sounding reference signal, SRS) measurement results to be used for location estimation to and from the NG RAN node 3-05. At this time, an NR positioning protocol A (NRPPa) may be used as the protocol for data exchange, and the NRPPa may define specifications of messages transmitted and received between the NG-RAN node 3-05 and the LMF 3-15. The LMF 3-15 may be referred to as an LMF entity as a network entity.

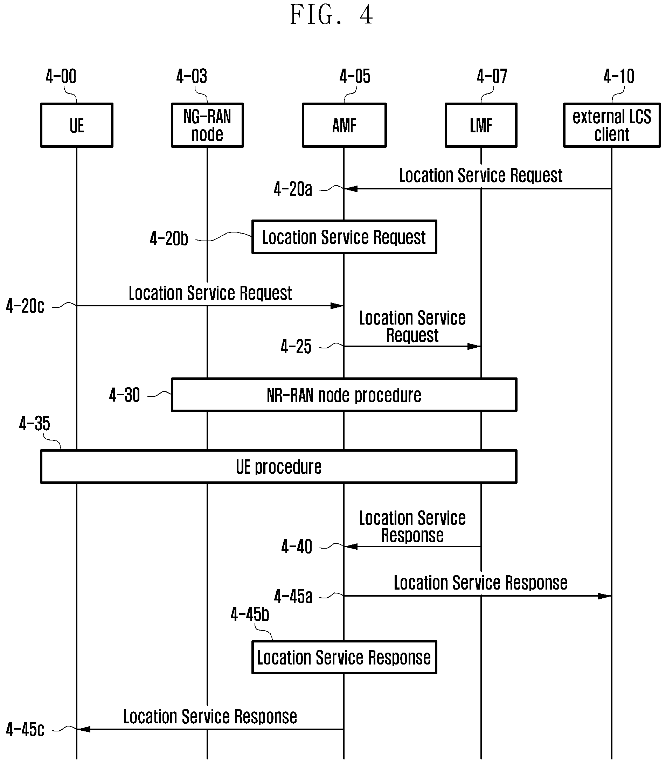

FIG. 4 is a flowchart illustrating a process of performing LCS in a wireless mobile communication system according to an embodiment of the disclosure.

Referring to FIG. 4, an AMF 4-05 may receive LCS requests 4-20a, 4-20b, and 4-20c, and then transfer the same to an LMF 4-07. Thereafter, the LMF 4-07 may control the process of exchanging necessary information with the UE and the NG RAN node in order to process the LCS requests 4-20a, 4-20b, and 4-20c, and transfer a result value (location estimation result) to the AMF 4-05. The LCS may be completed as the AMF 4-05 transfers the result value (location estimation result) to the target that requested the LCS.

The LCS request received by the AMF 4-05 in operation 4-20 may include the following three types.
1. The LCS request 4-20a received from an external LCS client 4-10
2. The LCS request 4-20b generated by the AMF 4-05 itself
3. The LCS request 4-20c received from a UE 4-00

The LCS request may include an ID of the LCS target UE and LCS quality of service (QoS) request information (e.g., location estimation accuracy and requirements for delay time).

After receiving one of the three types of LCS requests, the AMF 4-05 may transmit a location service request message 4-25 to the LMF 4-07 to make a request for providing the location estimation service.

Then, in an operation of an NG-RAN node procedure 4-30, the LMF 4-07 may perform a procedure (e.g., NG RAN node PRS configuration, NG-RAN node SRS measurement information acquisition, and the like) necessary for location estimation through exchange of NRPPa messages with the NG-RAN node 4-03.

In addition, in an operation of a UE procedure 4-35, the LMF 4-07 may transmit and receive LPP messages to exchange required information elements with the UE 4-00. For example, the LMF 4-07 may receive UE capability information related to location estimation, and perform procedures of transmitting auxiliary information for signal measurement of the UE, and making a request for and acquiring a UE measurement result.

When the estimated location of the UE is determined based on several measurement results acquired by the LMF 4-07, the LMF 4-07 may transfer a location service response message 4-40 to the AMF 4-05.

The AMF 4-05 may transfer LCS response messages 4-45a, 4-45b, and 4-45c to the target that requested the LCS, and the LCS response messages 4-45a, 4-45b, and 4-45c may include the UE location estimation result.

The names of the requests or messages described in the disclosure are not limited to the names described in the disclosure, and the requests or messages may be expressed by other names based on characteristics or properties thereof. Alternatively, a first request (or message), a second request (or message), and the like may be expressed.

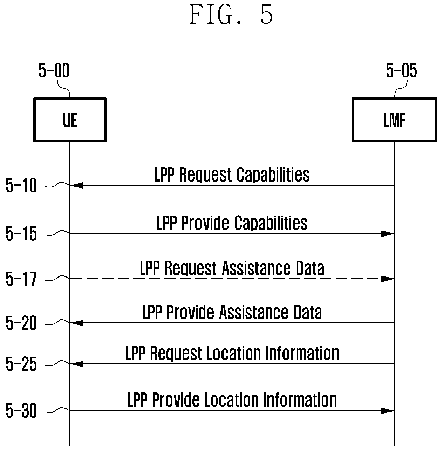

FIG. 5 is a flowchart illustrating a process of exchanging LTE positioning protocol (LPP) messages between a UE and a location management function (LMF) according to an embodiment of the disclosure.

Referring to FIG. 5, a process of exchanging LTE positioning protocol (LPP) messages in the operation of the UE procedure 4-35 in FIG. 4 is illustrated. For example, an LMF 5-05 may perform a procedure of exchanging UE capability information related to location estimation with a UE 5-00, transmitting auxiliary information for signal measurement of the UE, and making a request for and acquiring UE measurement results. An example of the purpose and definition for each LPP message transmitted and received in each operation is as follows.

LPP Request Capabilities (LMF -> UE 5-10): may be used by the LMF 5-05 to make a request for UE capability information elements related to location estimation to the UE 5-00. Information included in the message may be defined as in, for example, [Table 1] below. The request for common information, regardless of the location estimation method (e.g., global navigation satellite system (GNSS), observed time difference of arrival (OTDOA), enhanced cell identity (ECID), etc.), is included in a predetermined message (e.g., CommonlEsRequestCapabilities), and the request for information additionally required for each location estimation method may be included in a separate parameter or information element (IE) for each method.

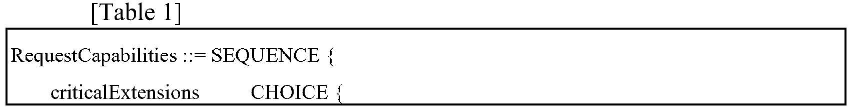

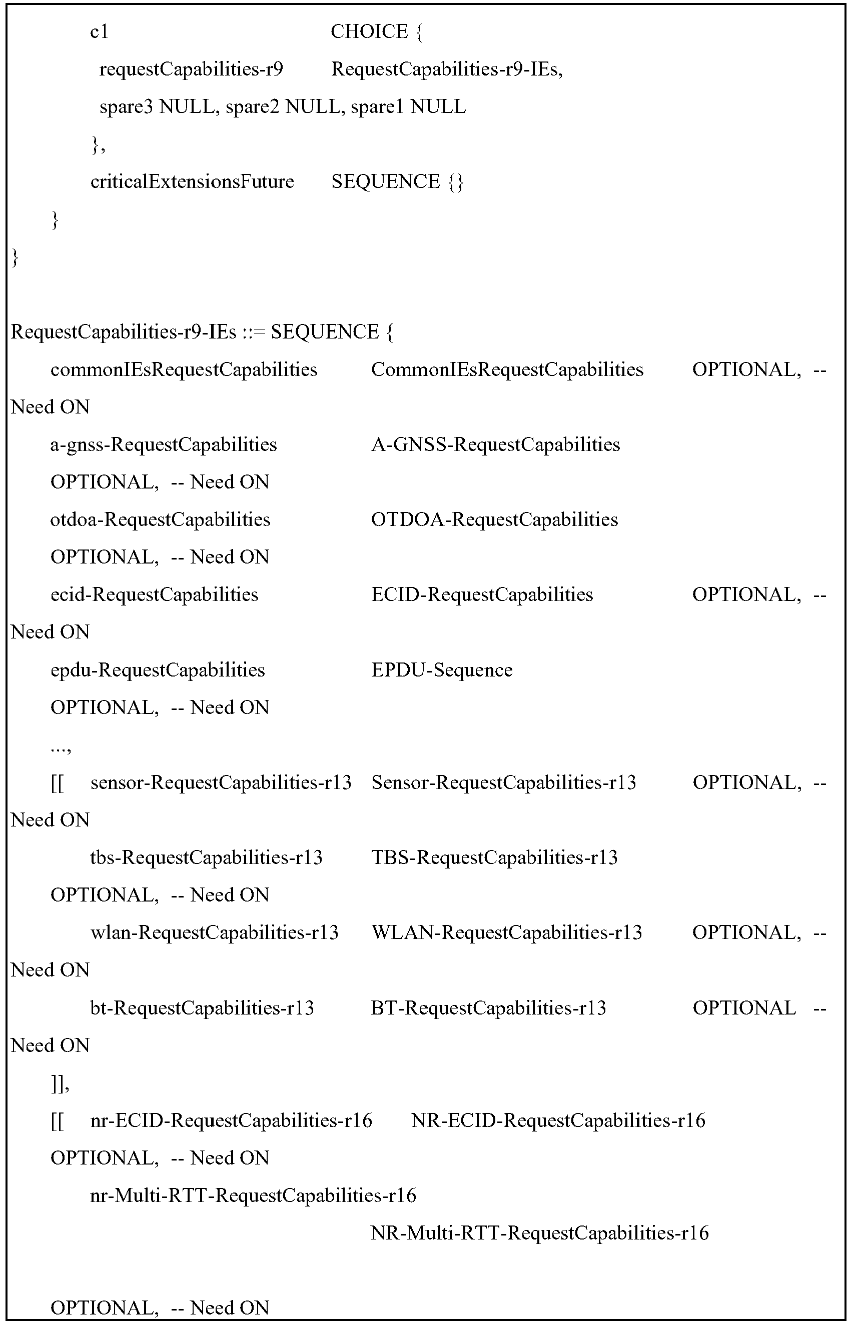

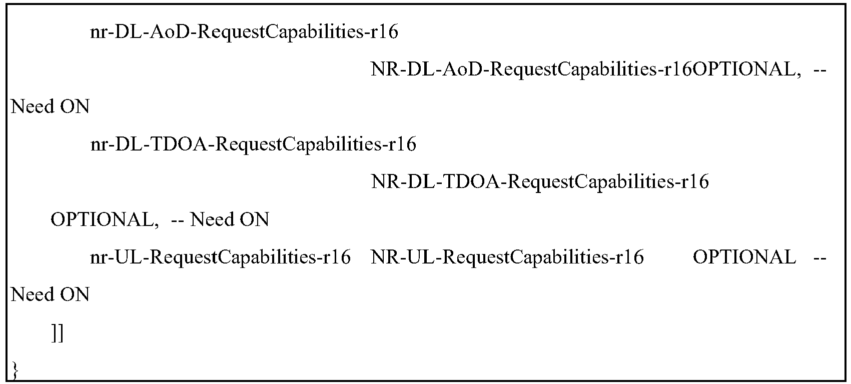

LPP Provide Capabilities (UE -> LMF 5-15): may be used to transfer UE capability information elements for which a request is received by the UE 5-00 from the LMF 5-05. The information included in the message may be defined as in, for example, [Table 2] below. Similar to the LPP Request Capabilities message, common information regardless of the location estimation method may be included in commonlEsProvideCapabilities, and the requested information elements for each location tracking method may be included in a separate parameter or IE.

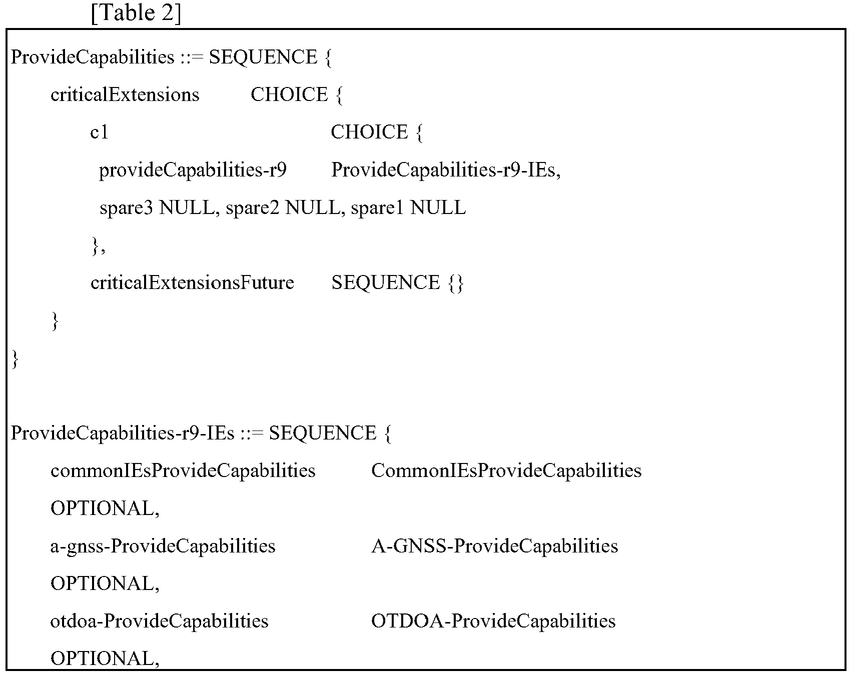

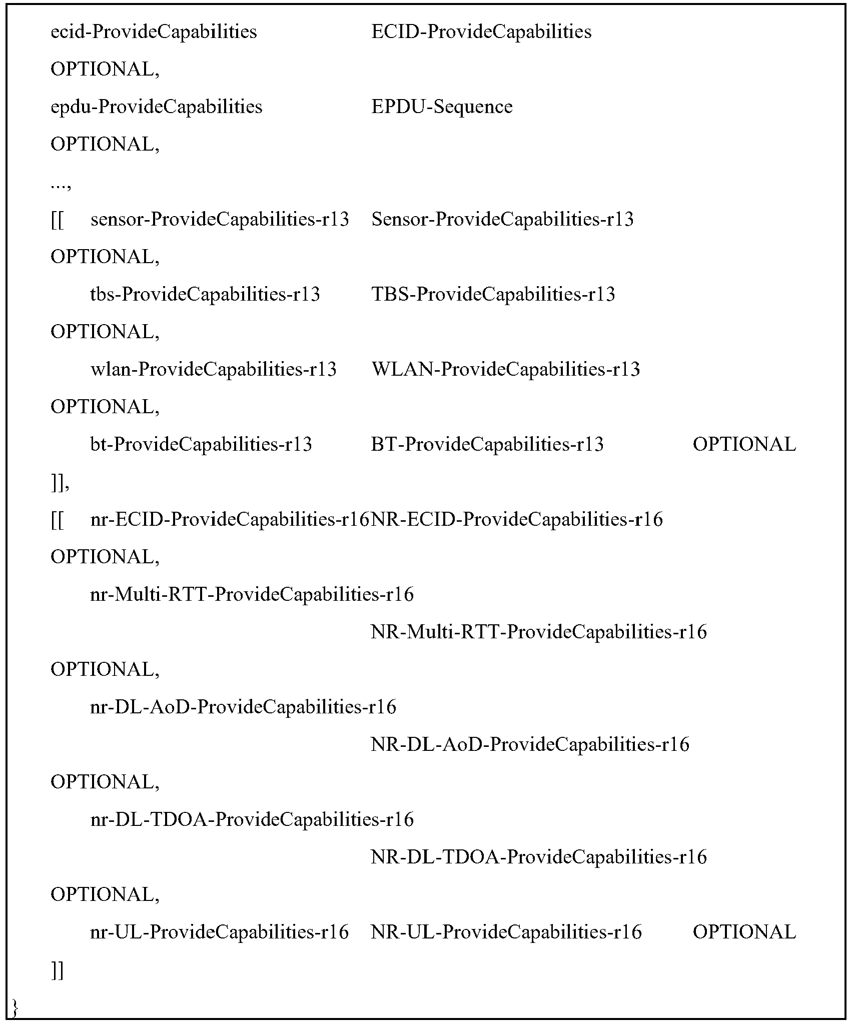

LPP requestAssistanceData (UE → LMF, 5-17): This may be used by the UE 5-00 to make a request for information elements that are needed or helpful to measure a radio signal for location estimation to the LMF 5-05. Information included in the message may be defined as in, for example, [Table 3]. Common information irrelevant to the location estimation method is included in commonIEsRequestAssistanceData, and information elements requested for each location tracking method may be included in a separate parameter or IE. Meanwhile, the LPP requestAssistanceData message may not be transmitted in some cases.

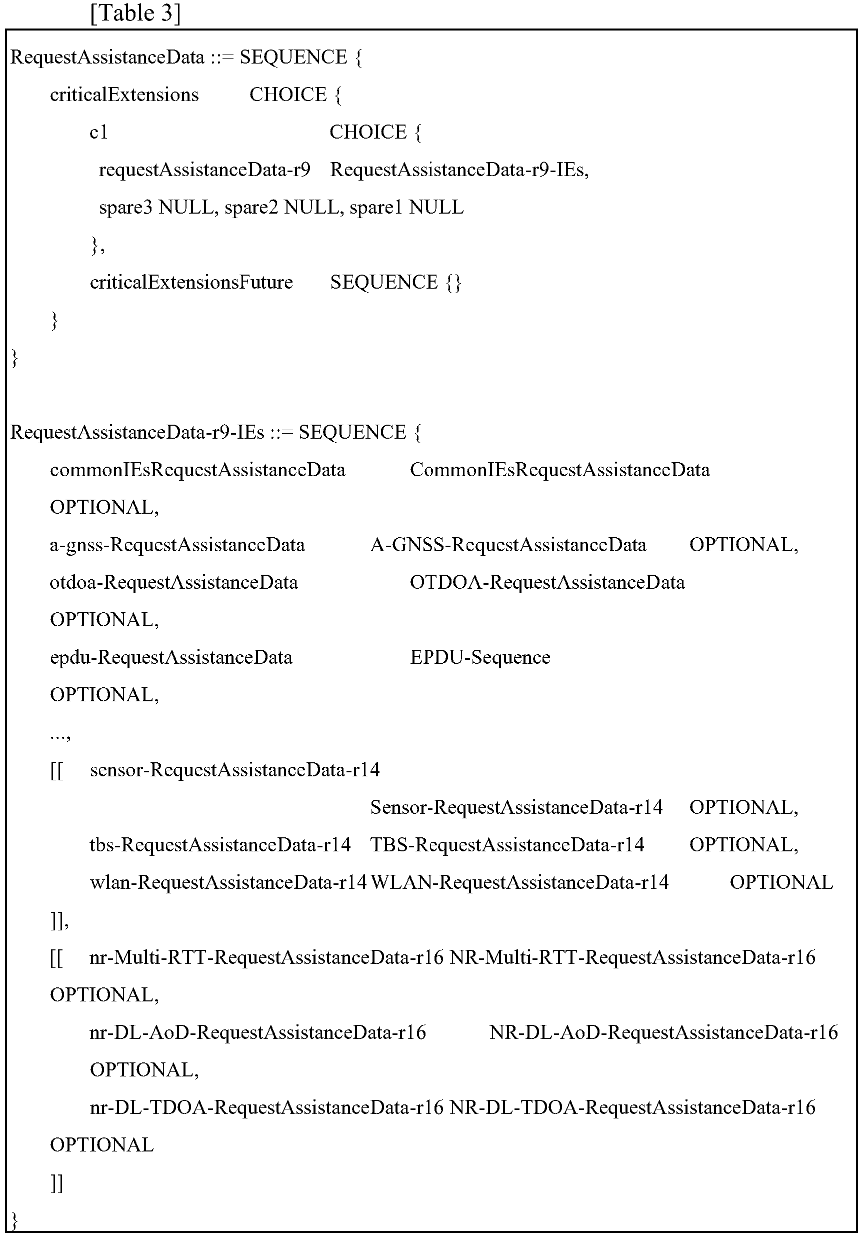

LPP ProvideAssistanceData (LMF -> UE, 5-20): may be used by the LMF 5-05 to provide information elements needed or helpful to measure a radio signal for location estimation by the UE 5-00. Information included in the message may be defined as in, for example, [Table 4]. Common information irrelevant to the location estimation method is included in commonlEsProvideAssistanceData, and information elements provided for each location tracking method may be included in a separate parameter or IE.

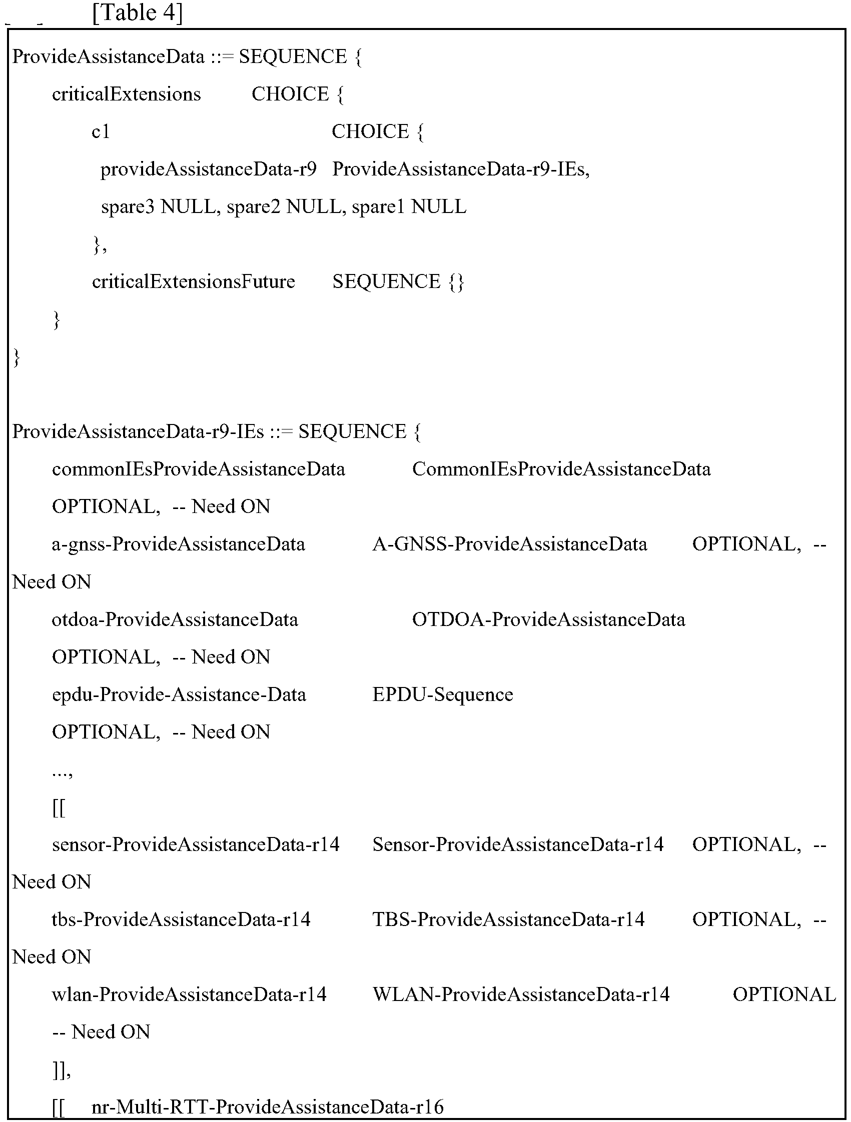

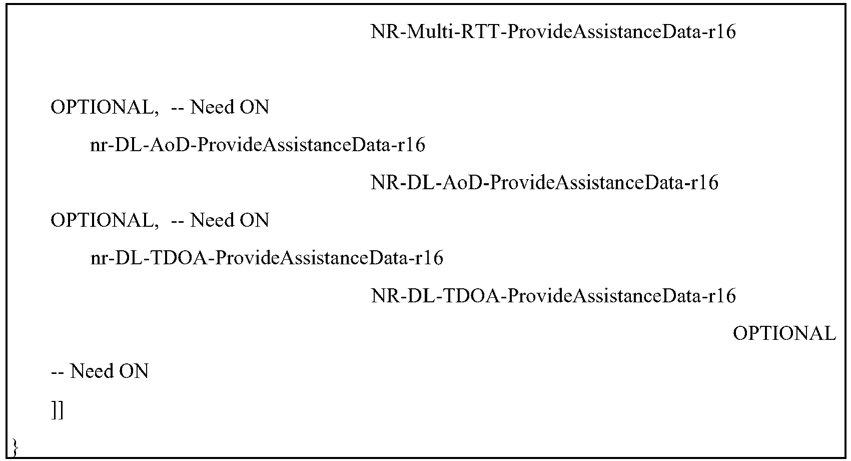

LPP Request Location Information (LMF → UE, 5-25): may be used by the LMF 5-05 to make a request for measuring a signal needed for location estimation and a location estimation result to the UE 5-00. The LMF 5-05 may determine, for example, which location estimation method to use, which measurement the UE should perform for the purpose, which result to provide, and how to respond to, and then include relevant information elements in the message and transfer the message to the UE 5-00. The information included in the message may be defined as in, for example, [Table 5].

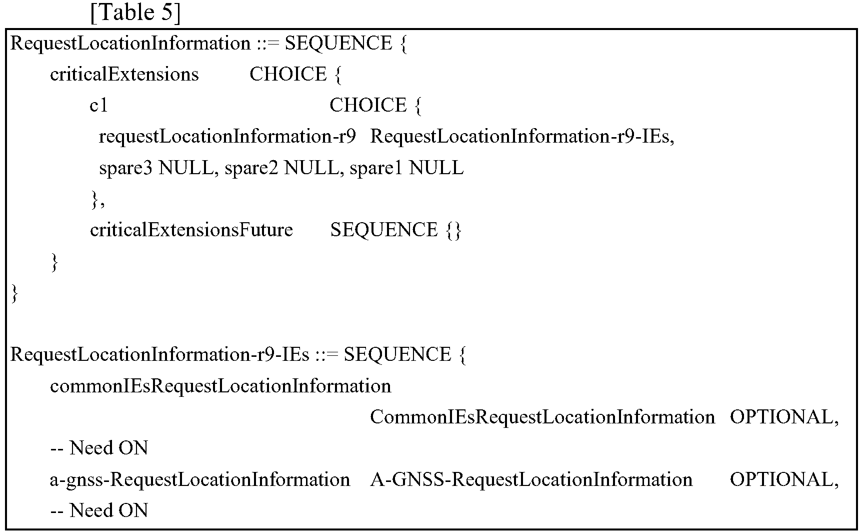

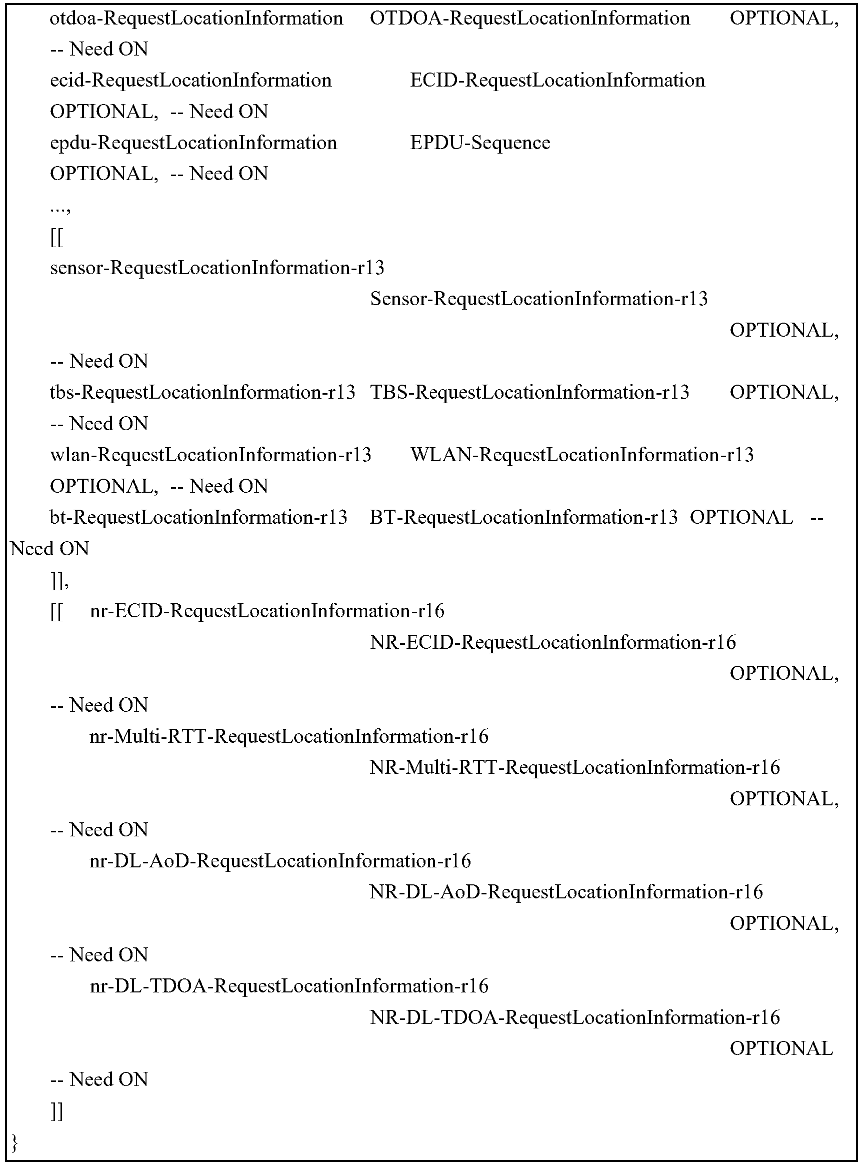

LPP Provide Location Information (UE → LMF, 5-30): may be used by the UE 5-00 to transmit the measurement result and location estimation result for which the request was received from the LMF 5-05 to the LMF 5-05. The information included in the message may be defined as in, for example, [Table 6].

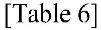

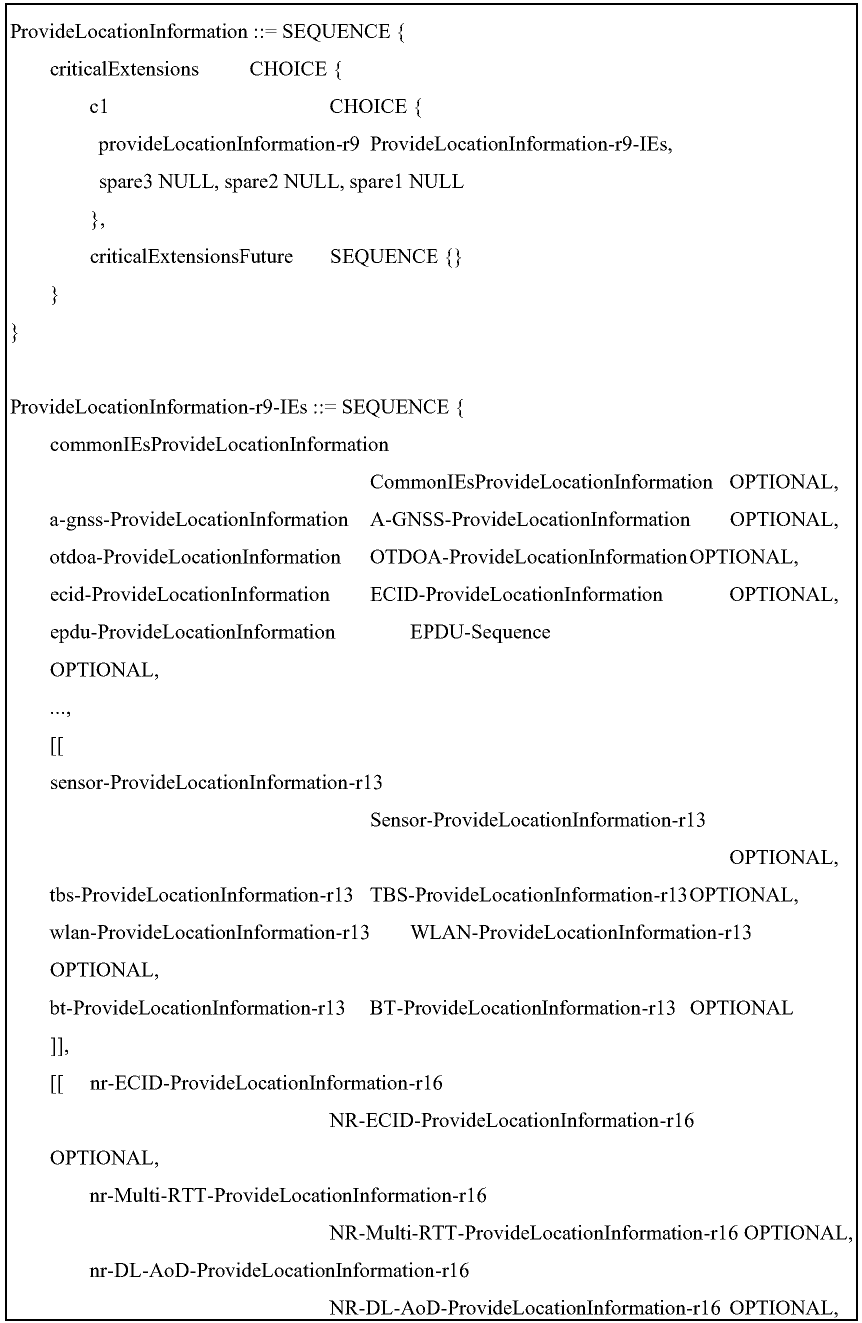

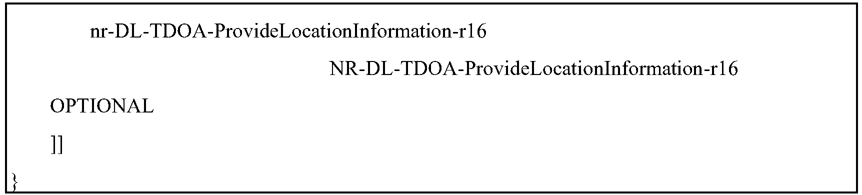

The names of the requests or messages described in the disclosure are not limited to the names described in the disclosure, and the requests or messages may be expressed by other names based on characteristics or properties thereof.

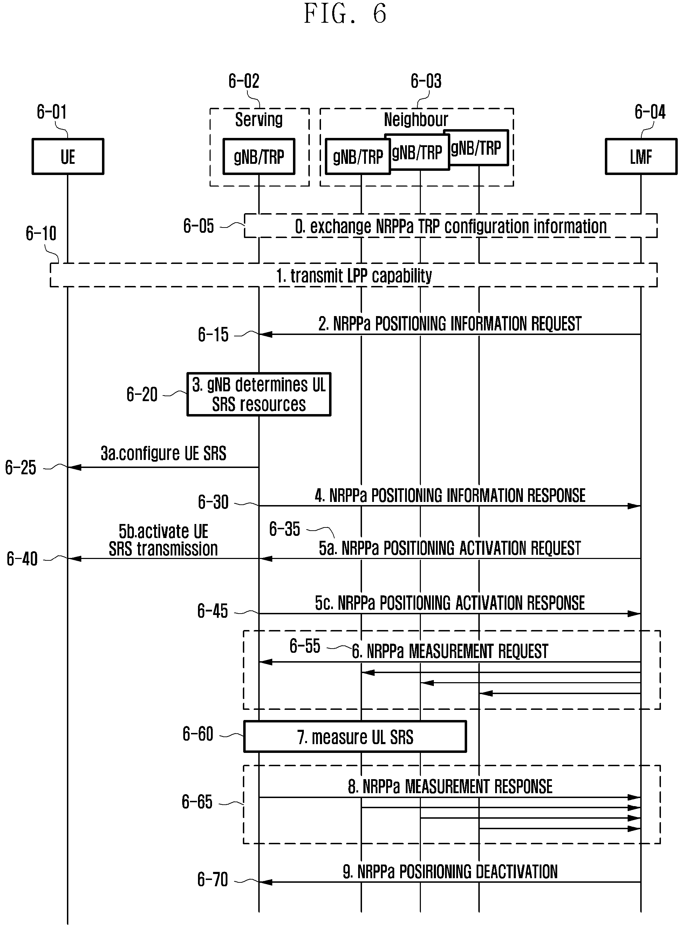

FIG. 6 is a diagram illustrating a process of configuring sounding reference signal (SRS) transmission of the UE for location estimation according to an embodiment of the disclosure.

Referring to FIG. 6, a procedure for configuring sounding reference signal (SRS) transmission necessary for a UE 6-01 to perform at least one of a UL location estimation method (positioning method) or a DL+UL positioning method by an LMF 6-04 is illustrated. The operations illustrated in FIG. 6 are not necessarily all included according to configurations and/or definitions in the system, and some operations may be omitted.

The UL positioning method may refer to a method of estimating the location of the UE, based on an uplink signal transmitted by the UE. For example, the method may include a method in which the UE transmits an SRS signal through the uplink, and the location of the UE is estimated based on SRS measurement information (or a measured result value) obtained by the gNB/transmission reception point (TRP) which has received (or measured) the SRS signal transmitted by the UE.

The DL+UL positioning method may refer to a method in which the location of the UE is estimated based on a downlink signal transmitted by the gNB/TRP and an uplink signal transmitted by the UE. For example, the gNB/TRP may transmit a positioning reference signal (PRS) through the downlink. The UE receiving the PRS transmitted by the gNB/TRP may obtain PRS measurement information (or a measured result value). For example, the UE may transmit an SRS signal through the uplink, and the gNB/TRP receiving (or measuring) the SRS signal transmitted by the UE may obtain SRS measurement information (or a measured result value). Thereafter, the location of the corresponding UE may be estimated using both the PRS measurement information (or the measured result value) measured by the UE and the SRS measurement information (or the measured result value) measured by the gNB/TRP.

Therefore, in order to estimate the location of the UE by using at least one of the UL positioning method or UL+DL positioning method, a procedure for configuring the UE to transmit an SRS needs to be performed. Hereinafter, procedures performed in each operation will be described.

In operation 6-05, the LMF 6-04 may exchange NRPPa TRP configuration information with a serving gNB/TRP 6-02 and a neighbour gNB/TRP 6-03 (NRPPa TRP Configuration Information Exchange).

The LMF 6-04 may acquire information required to perform the UL positioning method from the serving gNB/TRP 6-02 and the neighbour gNB/TRP 6-03. Information required to perform the UL positioning method may include at least one of NR cell information, PRS configuration, spatial direction information, and location information.

In operation 6-10, the LMF 6-04 may exchange UE capability information with the UE 6-01 (LPP Capability Transfer).

The LMF 6-04 may make a request for and receive the UE capability information related to location estimation to the UE 6-02.

In operation 6-15, the LMF 6-04 may transmit an NRPPa positioning information request message to the serving gNB/TRP 6-02 (NRPPa POSITIONING

### INFORMATION REQUEST).

The NRPPa positioning information request message transmitted by the LMF 6-04 may include information for determining an SRS transmission resource configuration of the UE required for UL positioning, based on information already collected by the LMF (e.g., location information of adjacent TRPs, existing UE location information of the UE, SSB/PRS transmission information of TRPs, and the like) and making a request for the same to the serving gNB/TRP 6-02. The message may include information on at least one of the number of required SRS resources, periodicity, pathloss reference, and spatial relation.

In operation 6-20, the serving gNB/TRP 6-02 may finally determine SRS resources for transmitting the SRS by the UE (gNB Determines UL SRS Resources).

After receiving the NRPPa positioning information request message from the LMF 6-04, the serving gNB/TRP 6-02 may finally determine SRS resources to be configured for the UE, based on the received message.

In operation 6-25, the serving gNB/TRP 6-02 may transfer SRS resource configuration information (or SRS resource transmission configuration information or UE SRS configuration) determined in operation 6-20 to the UE 6-01.

The serving gNB/TRP 6-02 may transfer the SRS resource configuration information to the UE 6-01 through RRC signaling.

In operation 6-30, the serving gNB/TRP 6-02 may transmit an NRPPa positioning information response message to the LMF 6-04 (NRPPa POSITIONING INFORMATION RESPONSE).

The NRPPa positioning information response message transmitted by the serving gNB/TRP 6-02 may be used to transfer, to the LMF, the SRS resource configuration information (e.g., the location of the SRS resources in the time/frequency axis, periodicity, spatial relation information, and the like) finally transferred to the UE 6-01 in operation 6-25 by the serving gNB/TRP 6-02.

In operation 6-35, the LMF 6-04 may transmit an NRPPa POSITIONING ACTIVATION request message to the serving gNB/TRP 6-02 (NRPPa POSITIONING ACTIVATION REQUEST).

The NRPPa POSITIONING ACTIVATION request message may be used by the LMF 6-04 to make a request for activating SRS transmission of the UE 6-01 to the serving gNB/TRP 6-02 when the UE 6-02 has been configured to transmit a semi-persistent SRS or an aperiodic SRS.

In operation 6-40, the serving gNB/TRP 6-02 may configure activation of SRS transmission to the UE 6-01 (Activate UE SRS transmission).

The serving gNB/TRP 6-02 receiving the NRPPa POSITIONING ACTIVATION REQUEST message may indicate SRS activation to the UE 6-40 through a medium access control (MAC) control element (CE) or downlink control information (DCI).

In operation 6-45, the serving gNB/TRP 6-02 may transmit an NRPPa POSITIONING ACTIVATION RESPONSE message to the UE 6-01 (NRPPA POSITIONING ACTIVATION RESPONSE).

The NRPPa POSITIONING ACTIVATION RESPONSE message may be used by the serving gNB/TRP 6-02 to transfer information (or the SRS activation completion) indicating whether SRS activation is completed to the LMF 6-04 in response to the NRPPa POSITIONING ACTIVATION REQUEST message.

In operation 6-55, the LMF 6-04 may transmit an NRPPa MEASUREMENT REQUEST message (NRPPa MEASUREMENT REQUEST).

The NRPPa MEASUREMENT REQUEST message may be used by the LMF 6-04 to make a request for measuring an SRS transmitted by the UE and reporting a result to the serving gNB/TRP 6-02 and the neighbour gNB/TRP 6-03. At this time, the NRPPa MEASUREMENT REQUEST message may also include SRS resource information configured for the UE 6-01.

In operation 6-60, the serving gNB/TRP 6-02 and the neighbour gNB/TRP 6-03 may measure the SRS transmitted by the UE 6-01 (UL SRS Measurements).

The serving gNB/TRP 6-02 and the neighbour gNB/TRP 6-03 receiving the request for measuring the SRS from the LMF 6-04 through the NRPPa MEASUREMENT REQUEST message may measure the SRS transmitted by the UE 6-01, based on SRS configuration information included in the NRPPa MEASUREMENT REQUEST message.

In operation 6-65, the serving gNB/TRP 6-02 and the neighbour gNB/TRP 6-03 may transmit an NRPPa MEAUREMENT RESPONSE message to the LMF 6-04 (NRPPa MEASUREMENT RESPONSE).

The NRPPa MEASUREMENT RESPONSE message may be used to transmit, to the LMF 6-04, the result of the SRS measurement for which the request was received by the serving gNB/TRP 6-02 and the neighbour gNB/TRP 6-03 from the LMF 6-04 in operation 6-55.

In operation 6-70, the LMF 6-04 may transmit an NRPPa POSITIONING DEACTIVATION message to the serving gNB/TRP 6-02 (NRPPa POSITIONING DEACTIVATION).

The NRPPa POSITIONING DEACTIVATION message may be transmitted by the LMF 6-04 to the serving gNB/TRP 6-02 in order to deactivate SRS transmission requested in operation 6-35 after the LMF 6-04 has completed the location estimation technique operation.

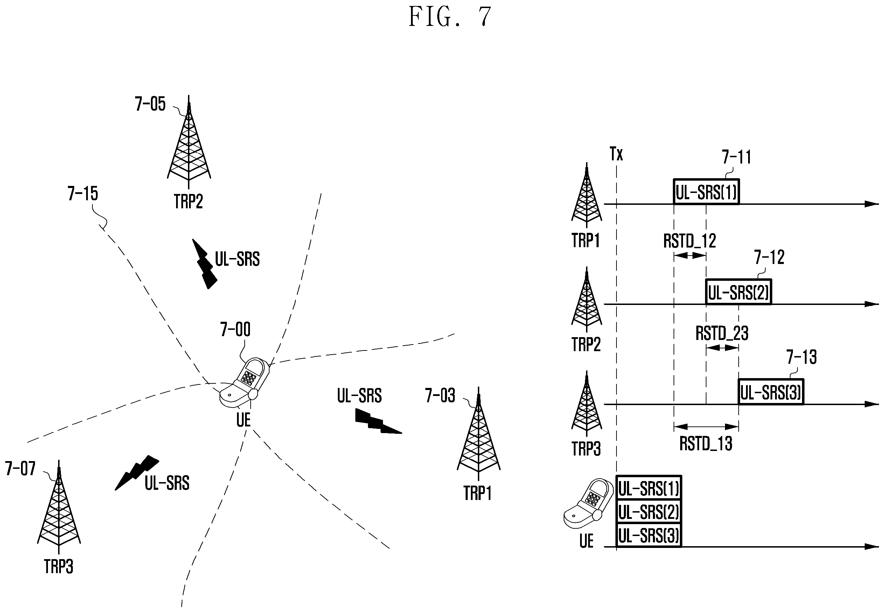

FIG. 7 is a diagram illustrating a scenario of estimating a location of a UE, based on a UL-SRS transmitted by the UE according to an embodiment of the disclosure.

Referring to FIG. 7, a UE 7-00 may transmit UL-SRS 7-11, 7-12, and 7-13 to a plurality of different TRPs 7-03, 7-05, and 7-07, respectively. Timing information (reception time information) in which each TRP receives the UL-SRS may be reported to the LMF, and may be used by the LMF to estimate the location of the corresponding UE. For example, in the case of using a location estimation method based on an uplink time difference of arrival (UL-TDOA) scheme, a difference value (reference signal timing difference (RSTD)) of the times when the respective TRPs have received the UL-SRSs transmitted simultaneously by the UE may be measured and calculated by the LMF. In the present embodiment, three RSTD values may be measured and calculated for each TRP pair receiving UL-SRSs transmitted by the UE to three different TRPs. Thereafter, hyperbolas 7-15 may be generated by connecting locations at which the corresponding RSTD values may be measured with a line for each RSTD, and the UE may be estimated as being positioned in the region in which three hyperbolas 7-15 overlap.

Schemes for estimating the location of the UE using information on timing at which different TRPs receive UL-SRSs transmitted by the UE may include UL-TDOA, multi-RTT, and the like. In the case of the multi-RTT scheme, the location of the UE is estimated using a round trip time (RTT) value measured through a process in which the UE receives the DL-PRS transmitted by the TRP, and the TRP receives the UL-SRS transmitted by the UE. In this case, a circle is generated by connecting locations with a line where the corresponding RTT value can be measured based on the RTT value measured between each TRP and the UE, and it may be estimated that the corresponding UE is positioned in an area where a plurality of circles overlap. In the case of the UL-TDOA and multi-RTT schemes, the location of the UE is estimated based on information on timing at which the TRP receives the UL-SRS signal transmitted by the UE for location estimation, and thus the degree to which the TRP accurately detects the UL-SRS signal while receiving the radio signal and precisely measures the detection time may affect the accuracy of location estimation. In addition, the UL-SRS detection performance and the detection timing measurement accuracy may be further improved when the UL-SRS is transmitted using a wider bandwidth. Therefore, in order to improve the accuracy of UE location estimation, UL-PRSs transmitted through different carriers (or serving cells) may be aggregated. The method of aggregating the UL-PRSs will be described in more detail below with reference to FIG. 1H.

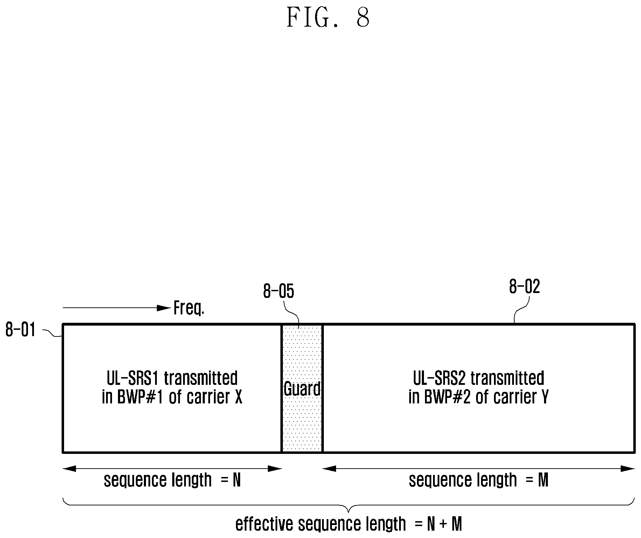

FIG. 8 is a diagram illustrating a scenario in which different UL-SRSs transmitted through different carriers (or serving cells) are aggregated according to an embodiment of the disclosure.

Referring to FIG. 8, in order to improve the location estimation accuracy when using location estimation schemes (e.g., UL-TDOA, Multi-RTT, etc.,) based on the UL-SRS reception time point, UL-SRSs transmitted through different (or serving cells) may be aggregated. When the UL-SRSs transmitted through different (or serving cells) are aggregated, the TRP may recognize the corresponding UL-SRSs as one aggregated UL-SRS in the frequency domain, detect the UL-SRS, and measure the detection time point.

For example, when UL-SRS1 8-01 having the sequence length N is transmitted using bandwidth 1 (bandwidth #1) in carrier X and UL-SRS2 8-02 having the sequence length Y is transmitted using bandwidth 2 (bandwidth #2) in carrier Y, UL-SRS 1 8-01 and UL-SRS2 8-02 may be aggregated. When UL-SRS1 and UL-SRS2 are aggregated, the TRP may perform joint measurement (or aggregated measurement) for UL-SRS1 and UL-SRS2. When the TRP performs joint measurement for UL-SRS 1 8-01 and UL-SRS2 8-02, the TRP may recognize UL-SRS1 and UL-SRS2 as one UL-SRS transmitted using a bandwidth of Bandwidth #1 + Bandwidth #2 and having a length of N+M, and perform UL-SRS detection and detection time point measurement.

In general, as the radio signal is transmitted using a wider bandwidth in the frequency domain, the resolution is higher in the time domain. Therefore, when the TRP performs joint measurement for the aggregated UL-SRS1 and UL-SRS2, the TRP may more precisely detect the time point at which the aggregated UL-SRS is detected. In addition, in general, the longer the sequence length of the reference signal (RS), the better the performance of detecting the RS in the radio signal received by the TRP. Therefore, by aggregating different UL-SRSs transmitted through different carriers, the location estimation accuracy can be improved when location estimation schemes (e.g., UL-TDOA, multi-RTT, etc.) based on the UL-SRS reception time point is used. For the sake of description, an operation of aggregating different UL-SRSs transmitted through different carriers for the purpose of improving location accuracy will be briefly expressed as "UL-SRS BW aggregation." The aggregated UL-SRSs are expressed as "aggregated UL-SRSs", and carriers through which the aggregated UL-SRSs are transmitted are expressed as "aggregated carriers".

In order to measure different UL-SRSs transmitted through different carriers as one UL-SRS after aggregation in the frequency domain, a distance 8-05 (guard size) between resources in which UL-SRSs to be aggregated in the frequency domain are transmitted may be guaranteed to be at a certain level (e.g., 12 resource elements) or less. UL-SRS BW aggregation may be performed for two or more (e.g., 2 or 3) consecutive carriers located in the same band in the frequency domain. In addition, aggregation may be performed for UL-SRS resources satisfying a certain condition.

Conditions of UL-SRS resources for performing aggregation according to an embodiment of the disclosure may be one or a combination of the following as an example.
- UL SRS resources may be located in the same slot and symbol in the time domain.
- UL-SRS resources may have the same periodicity and slot offset.
- UL-SRS resources may have the same muting pattern.
- UL-SRS resources may have the same NR-UL-SRS-SFN0-Offset value.
- UL-SRS resources may be transmitted through the same antenna reference point (ARP) and the same RF chain in the same UE.
- UL-SRS resources may be transmitted through the same number of symbols.
- UL-SRS resources may have the same repetition factor value.
- UL SRS resources may be transmitted using the same numerology (same cyclic prefix or same sub-carrier spacing).
- UL-SRS resources may be transmitted through the same or different bandwidths.
- UL-SRS resources may have the same comb size.
- UL-SRS resources may have the same subcarrier unit transmission power.
- UL SRS resources may have phase continuity guaranteed between aggregated carriers.

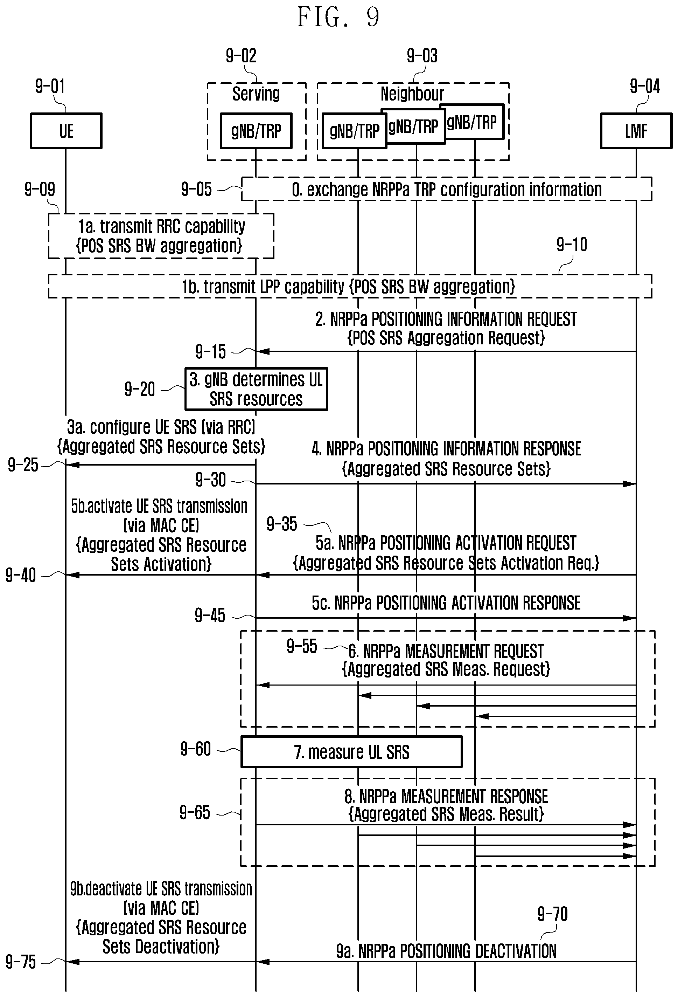

FIG. 9 is a flowchart illustrating a signaling process for using the UL-SRS BW aggregation for location estimation of the UE according to an embodiment of the disclosure.

Referring to FIG. 9, a UE 9-01 may report UE capability information related to a UL-SRS BW aggregation operation to a serving gNB 9-02 and an LMF 9-04. When the LMF 9-04 determines that the UL-PRS BW aggregation operation is necessary, the LMF 9-04 may make a request for aggregating UL-SRS resources transmitted by the UE 9-01 of which the location is to be estimated to the serving gNB 9-02 in operation 9-15 and provide specific requirements related thereto. Thereafter, the serving gNB 9-02 may determine aggregated UL-SRS resources to be allocated to the UE 9-01 in operation 9-20, and provide the UE 9-01 and provide the LMF 9-04 with transmission configuration information 9-25 and 9-30 on the aggregated UL-SRS resources. Subsequently, the LMF 9-04 may make a request (9-35) for activating aggregated UL-SRS transmission by the UE to the serving gNB 9-02. The serving gNB 9-02 may instruct the UE to activate the aggregated UL-SRS transmission according to the request from the LMF in operation 9-40, and then report the result to the LMF in operation 9-45. Thereafter, the LMF 9-04 may indicate joint measurement (or aggregated measurement) for the aggregated UL-SRS resources transmitted by the UE to the TRPs 9-02 and 9-03 in operation 9-55. In this case, the TRPs may perform the joint measurement according to the instruction of the LMF 9-04 in operation 9-60 and then report the result value (e.g., UL-SRS reception time point) to the LMF in operation 9-65. When the location estimation procedure for the UE is completed, the LMF may make a request for deactivating the aggregated UL-SRS transmission by the UE to the serving gNB 9-02 in operation 9-70. The serving gNB may instruct the UE to deactivate the aggregated UL-SRS transmission according to the request from the LMF in operation 9-75. Detailed signaling procedures for the operation may be described below.

Operations illustrated in FIG. 9 are not all necessarily included according to configurations and/or definitions in the system, and some operations may be omitted.

In operation 9-05, the LMF 9-04 may exchange NRPPa TRP configuration information with the serving gNB/TRP 9-02 and the neighbour gNB/TRP 9-03 (NRPPa TRP Configuration Information Exchange).

The LMF 9-04 may acquire information necessary to perform the UL positioning method from the serving gNB/TRP 9-02 and the neighbour gNB/TRP 9-03. Information required to perform the UL positioning method may include at least one of NR cell information, PRS configuration, spatial direction information, and location information.

In operation 9-09, the UE 9-01 and the serving gNB/TRP 9-02 may exchange UE capability information. At this time, the UE 9-01 may provide the serving gNB 9-02 with a combination of at least one of the following UE capability information related to a UL-SRS BW aggregation operation for location estimation.
- Support of UL-SRS aggregation: a 1-bit indicator indicating whether or not aggregated UL-SRS transmission is possible for aggregated UL-SRS resources or indicating that it is possible. The aggregated UL-SRS transmission may refer to an operation of aggregating and transmitting different UL-SRS resources transmitted through different carriers (or serving cells). The indicator may be defined in the form of nr-UL-SRS-AggregatedTransSupport ENUMERAGED {supported}.
- The maximum number of Carriers used for aggregation: an indicator indicating the maximum number of carriers that can be used for UL-SRS BW aggregation. For example, the indicator may indicate a maximum of carriers (or serving cells) from which the aggregated UL-SRSs are transmitted, the aggregated UL-SRS transmission being performed by the UE. The indicator may be defined in the form of maxSupportedAggregatedCarriers INTEGER (2..3), and may be defined and configured in units of combinations of a UE, a band, or aggregated carriers.
- The maximum aggregated bandwidth: an indicator indicating the maximum bandwidth size that can be used for a UL-SRS BW aggregation operation. For example, the indicator may indicate the maximum bandwidth size that the UE may use for performing aggregated UL-SRS transmission for the aggregated UL-SRSs. The indicator may be defined in the form such as supportedBandwidthAggregationSRS ENUMERATED {mhz50, mhz100, mhz150, mhz200, mhz400, mhz800...} (where, "mhz50" may mean 50 MHz, "mhz100" may mean 100 MHz, and the same applies to the following), and may be defined and configured in units of combinations of a UE, a band, or aggregated carriers.
- The maximum number of SRS resources processed in a slots over the aggregation: an indicator indicating the maximum number of aggregated UL-SRS resources that the UE can process (or transmit) per slot. The indicator may be defined in the form of maxNumOfAggregatedUL-SRS-ResProcessedPerSlot ENUMERATED {n1, n2, n4, n8, n16, n24, n32, n48, n64} (where "n1" indicates one resource, "n2" indicates two resources, and the same applies to the following), and may be defined and configured in units of combinations of a UE, a band, or aggregated carriers.

In operation 9-10, the LMF 9-04 may exchange UE capability information between the LMF 9-04 and the UE 9-01 (LPP Capability Transfer).

The LMF 9-04 may make a request for and receive the UE capability information related to location estimation to the UE 9-02. At this time, the UE 9-01 may provide the LMF 9-04 with a combination of at least one of the following UE capability information related to a UL-SRS BW aggregation operation for location estimation.
- Support of UL-SRS aggregation: a 1-bit indicator indicating whether or not aggregated UL-SRS transmission is possible for aggregated UL-SRS resources or indicating that it is possible. The aggregated UL-SRS transmission may refer to an operation of aggregating and transmitting different UL-SRS resources transmitted through different carriers (or serving cells). The indicator may be defined in the form of nr-UL-SRS-AggregatedTransSupport ENUMERAGED {supported}.
- The maximum number of Carriers used for aggregation: an indicator indicating the maximum number of carriers that can be used for UL-SRS BW aggregation. For example, the indicator may indicate whether the UE may perform aggregated UL-SRS transmission for aggregated UL-SRSs transmitted from a maximum of how many carriers (or serving cells). The indicator may be defined in the form of maxSupportedAggregatedCarriers INTEGER (2..3), and may be defined and configured in units of combinations of a UE, a band, or aggregated carriers.
- The maximum aggregated bandwidth: an indicator indicating the maximum bandwidth size that can be used for a UL-SRS BW aggregation operation. For example, the indicator may indicate the maximum bandwidth size that the UE may use for performing aggregated UL-SRS transmission for the aggregated UL-SRSs. The indicator may be defined in the form such as supportedBandwidthAggregationSRS ENUMERATED {mhz50, mhz100, mhz150, mhz200, mhz400, mhz800...} (where, "mhz50" may mean 50 MHz, "mhz100" may mean 100 MHz, and the same applies to the rest), and may be defined and configured in units of combinations of a UE, a band, or aggregated carriers.
- The maximum number of SRS resources processed in a slots over the aggregation: an indicator indicating the maximum number of aggregated UL-SRS resources that the UE can process (or transmit) per slot. The indicator may be defined in the form of maxNumOfAggregatedUL-SRS-ResProcessedPerSlot ENUMERATED {n1, n2, n4, n8, n16, n24, n32, n48, n64} (where "n1" indicates one resource, "n2" indicates two resources, and the same applies to the following), and may be defined and configured in units of combinations of a UE, a band, or aggregated carriers.

In operation 9-15, the LMF 9-04 may transmit an NRPPa positioning information request message to the serving gNB/TRP 9-02 (NRPPa POSITIONING INFORMATION REQUEST).

The NRPPa positioning information request message transmitted by the LMF 9-04 may include information making a request for UE SRS transmission resources required for UL positioning, which is determined based on information (e.g., location information of adjacent TRPs, existing UE location information, SSB/PRS transmission information of TRPs, and the like) collected by the LMF to the serving gNB/TRP 9-02. The message may include information on at least one of the number of required SRS resources, periodicity, pathloss reference, and spatial relation. In addition, when the LMF makes a request for performing aggregated UL-SRS transmission to the UE 9-01 during UL-SRS transmission for location estimation, the message may include a combination of at least one of the following pieces of information.
- 1-bit indicator to request UL-SRS BW aggregation: a 1-bit indicator for making a request for UL-SRS BW aggregation may be defined and configured.
- Aggregated UL-SRS BW: an indicator for indicating the bandwidth of the requested aggregated UL-SRS may be defined and configured. Alternatively, the configuration range of the bandwidth field, which has been configured in units of FRs, may be expanded to indicate a wider bandwidth exceeding 100mHz/400MHz from the existing bandwidth (FR1: 5mHz to 100mHz, FR2: 50mHz to 400 MHz). The LMF may make a request for a UL-SRS BW of 100MHz or 400MHz or more for each FR the serving gNB 9-02 by using the expanded field, and the serving gNB 9-02 may interpret this as an implicit request for UL-SRS BW aggregation.
- A number of carriers to use for UL-SRS BW aggregation: an indicator for making a request for the number of carriers to be used for UL-SRS BW aggregation may be defined and configured. For example, the indicator may indicate a value of 2 or 3.
- Set of carriers to use for BW UL-SRS aggregation: an indicator for making a request for a combination of carriers (or serving cells) to be used for BW UL-SRS aggregation may be defined and configured. The indicator may indicate one or more carrier combinations in the form of a list.
- Additional information for UL-SRS aggregation: when the indicator (set of carriers to use for UL-SRS BW aggregation) is configured, the UE may also include specific configuration information (e.g., aggregated UL-SRS BW, CombSizeN, periodicity, repetition factor, etc.) for each carrier combination.

In operation 9-20, the serving gNB/TRP 9-02 may finally determine SRS resources for transmitting the SRS by the UE (gNB Determines UL SRS Resources).

After receiving the NRPPa positioning information request message from the LMF 9-04, the serving gNB/TRP 9-02 may finally determine SRS resources to be configured for the UE, based on the received message.

In operation 9-25, the serving gNB/TRP 9-02 may transfer SRS resource configuration information (or SRS resource transmission configuration information or UE SRS configuration) determined in operation 9-20 to the UE 9-01 (UE SRS configuration). At this time, the UE SRS configuration information may be included in an RRCReconfiguration message.

The serving gNB/TRP 9-02 may transfer the SRS resource configuration information to the UE 9-01 through RRC signaling. In this case, the serving gNB 9-02 may indicate to the UE that two or more (e.g., two or three) UL-SRS resource sets configured in different carriers (or serving cells) have been aggregated (or linked). More specifically, the SRS resource configuration information may include at least one combination of the following content.
- One or a plurality of aggregated UL-SRS resource set combinations
- ID connected to each of the aggregated UL-SRS resource set combinations
- Two or more (e.g., two or three) aggregated UL-SRS resource sets (SRS-PosResourceSet) included in each of the aggregated UL-SRS resource set combinations
- Information (serving cell ID/index, BWP-ID, CellGroupInfo {MCG, SCG}, SRS-PosResourceSetId, etc.) necessary to indicate each of the aggregated UL-SRS resource sets

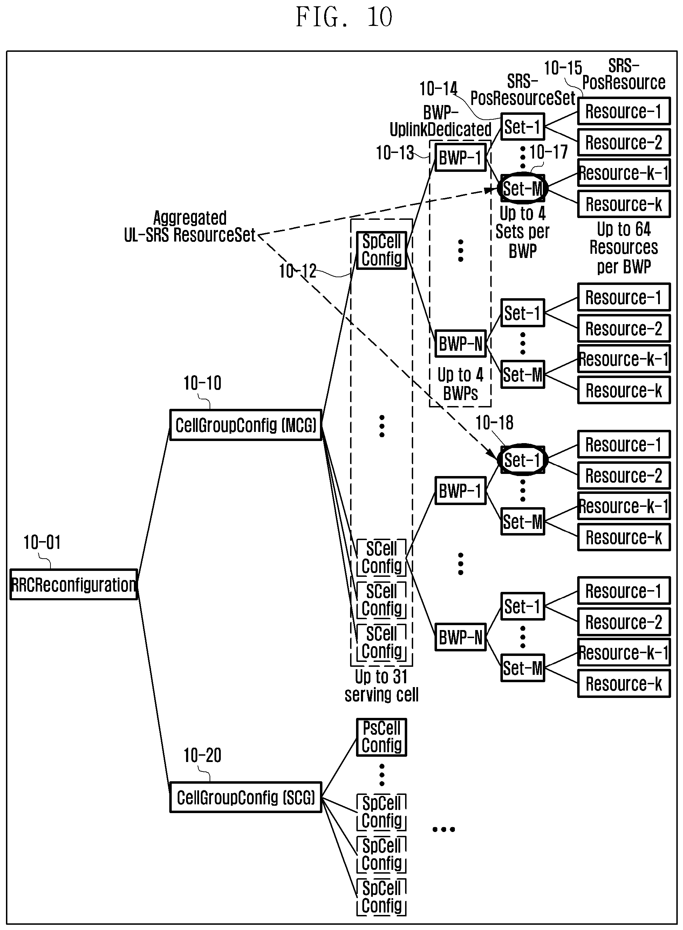

A detailed method by which the serving gNB/TRP 9-02 includes the above-described information elements in the RRCReconfiguration message is described in more detail in FIG. 10.

In operation 9-30, the serving gNB/TRP 9-02 may transmit an NRPPa positioning information response message to the LMF 9-04 (NRPPa POSITIONING INFORMATION RESPONSE).

The NRPPa positioning information response message transmitted by the serving gNB/TRP 9-02 may be used to transfer, to the LMF, the SRS resource configuration information (e.g., the location of the SRS resources in the time/frequency axis, periodicity, spatial relation information, and the like) finally transferred to the UE 9-01 in operation 9-25 by the serving gNB/TRP 9-02. Additionally, in operation 9-25, when the serving gNB 9-02 indicates to the UE 9-01 that two or more (e.g., two or three) UL-SRS resource sets configured in different carriers (or serving cells) have been aggregated (or linked), information corresponding thereto may be included in the NRPPa positioning information response message.

In operation 9-35, the LMF 9-04 may transmit an NRPPa POSITIONING ACTIVATION request message to the serving gNB/TRP 9-02 (NRPPa POSITIONING ACTIVATION REQUEST).

The NRPPa POSITIONING ACTIVATION request message may be used by the LMF 9-04 to make a request for activating SRS transmission of the UE 9-01 to the serving gNB/TRP 9-02 when the UE 9-02 has been configured to transmit a semi-persistent SRS or an aperiodic SRS. In addition, when the serving gNB 9-02 has indicated to the UE 9-01 that two or more (e.g., two or three) UL-SRS resource sets configured in different carriers (or serving cells) have been aggregated (or linked) in operation 9-25 and information corresponding thereto has been provided to the LMF 9-04 in operation 9-30, the LMF 9-04 may include information for making a request for activating some (e.g., one, two, or three) of the two or more UL-SRS resource sets included in the aggregated UL-SRS resource sets in the NRPPa POSITIONING ACTIVATION message.

In operation 9-40, the serving gNB/TRP 9-02 may configure activation of SRS transmission to the UE 9-01 (Activate UE SRS transmission).

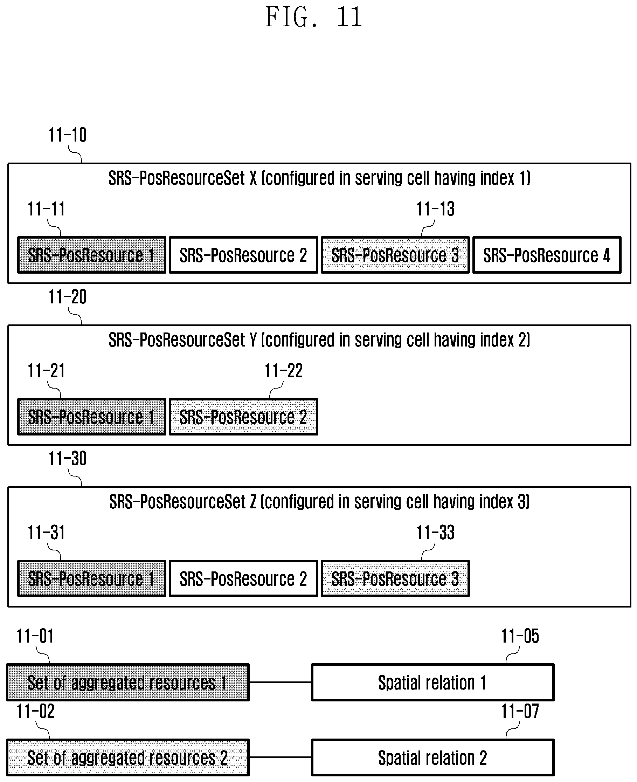

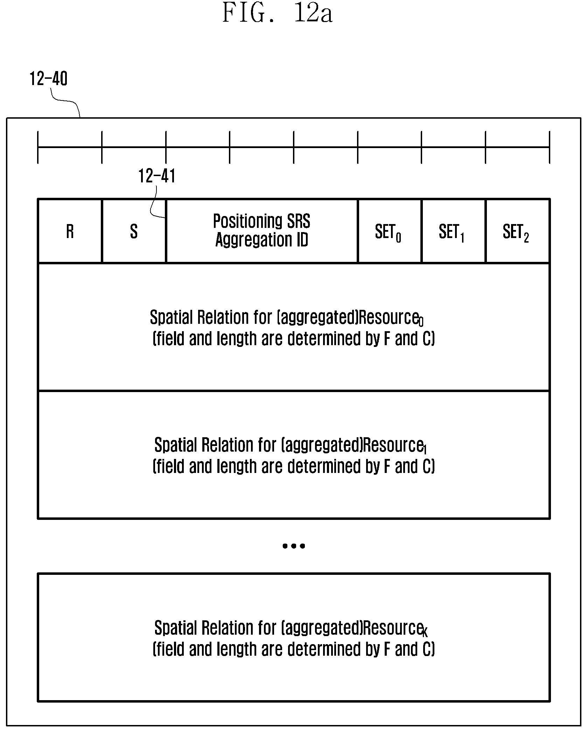

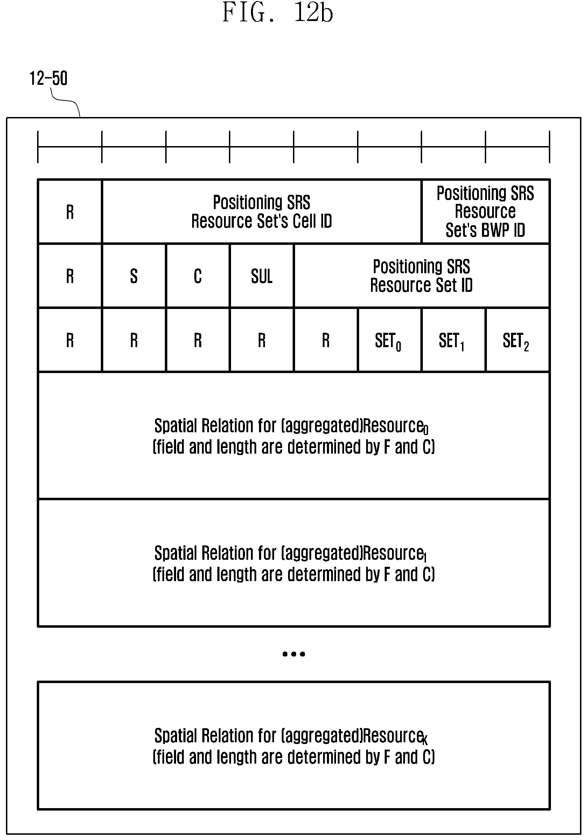

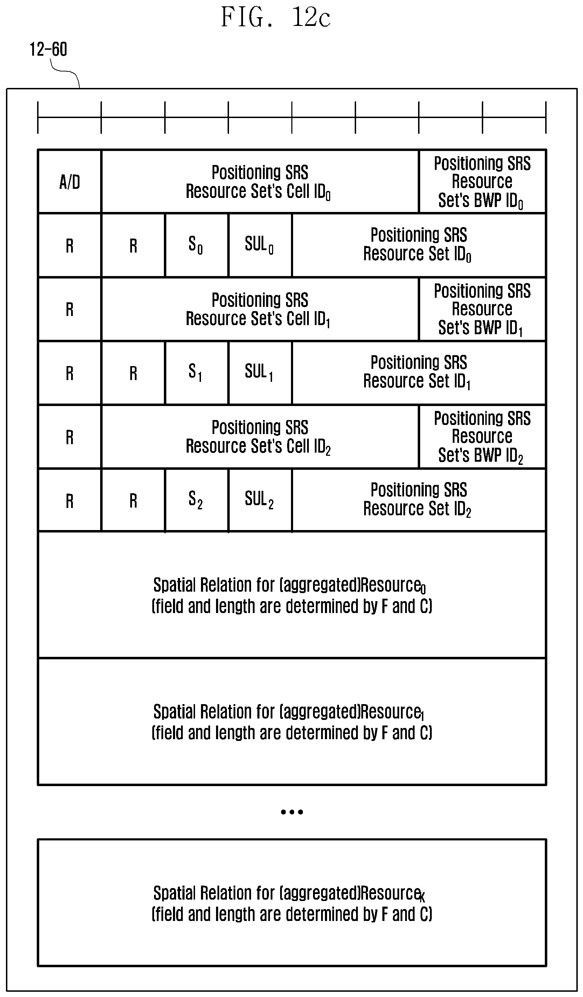

The serving gNB/TRP 9-02 receiving the NRPPa POSITIONING ACTIVATION REQUEST message may indicate SRS activation to the UE 9-40 through a MAC CE or DCI. In addition, when the serving gNB 9-02 has indicated to the UE 9-01 that two or more (e.g., two or three) UL-SRS resource sets configured in different carriers (or serving cells) have been aggregated (or linked) in operation 9-25, transmission activation of some (e.g., one, two, or three) of the two or more UL-SRS resource sets included in the aggregated UL-SRS resource sets may be indicated to the UE through one MAC CE.. A detailed MAC CE definition and configuration method therefor will be described in more detail with reference to FIG. 11 and FIGS. 12A to 12C.

In operation 9-45, the serving gNB/TRP 9-02 may transmit an NRPPa POSITIONING ACTIVATION RESPONSE message to the UE 9-01 (NRPPA POSITIONING ACTIVATION RESPONSE).

The NRPPa POSITIONING ACTIVATION RESPONSE message may be used by the serving gNB/TRP 9-02 to transfer information (or the SRS activation completion) indicating whether SRS activation is completed to the LMF 9-04 in response to the NRPPa POSITIONING ACTIVATION REQUEST message.

In operation 9-55, the LMF 9-04 may transmit an NRPPa MEASUREMENT REQUEST message (NRPPa MEASUREMENT REQUEST).

The NRPPa MEASUREMENT REQUEST message may be used by the LMF 9-04 to make a request for measuring an SRS transmitted by the UE and reporting a result to the serving gNB/TRP 9-02 and the neighbour gNB/TRP 9-03. At this time, the NRPPa MEASUREMENT REQUEST message may also include SRS resource information configured for the UE 9-01. In addition, when the serving gNB 9-02 has indicated to the UE 9-01 that two or more (e.g., two or three) UL-SRS resource sets configured in different carriers (or serving cells) have been aggregated (or linked) in operation 9-25 and information corresponding thereto has been provided to the LMF 9-04 in operation 9-30, the LMF 9-04 may include information for making a request for aggregated (or joint) measurement for the aggregated UL-SRS resource sets in the NRPPa MEASUREMENT REQUEST message. The LMF may indicate an aggregated measurement operation to the serving gNB/TRP 9-02 and the neighbour gNB/TRP 9-03 through the NRPPa MEASUREMENT REQUEST message by using at least one of the following methods.
- Method 1 (1 bit indication to request the aggregated measurement): the LMF may instruct the serving gNB/TRP 9-02 and the neighbour gNB/TRP 9-03 to perform aggregated measurement through a 1-bit indicator. When the serving gNB/TRP 9-02 and the neighbour gNB/TRP 9-03 are instructed by the LMF to perform aggregated measurement through the 1-bit indicator, the serving gNB/TRP 9-02 and the neighbour gNB/TRP 9-03 may perform aggregated measurement by using some or all of the aggregated UL-PRS resource sets included in the UL-SRS configuration information included in the NRPPa MEASUREMENT REQUEST message.
- Method 2 (Indication of AggregationID to use for the aggregated measurement): when the serving gNB 9-02 provides the UE with information on the aggregated UL-SRS resource sets by allocating an Aggregation ID to each of specific aggregated UL-SRS-ResourceSets in operation 9-25, the LMF may indicate the aggregated measurement to the serving gNB/TRP 9-02 and the neighbour gNB/TRP 9-03 by including a specific Aggregation ID in the NRPPa MEASUREMENT REQUEST message. When a specific aggregation ID value is configured in the NRPPa MEASUREMENT REQUEST message received from the LMF, the serving gNB/TRP 9-02 and the neighbour gNB/TRP 9-03 may perform aggregated measurement by using an aggregated UL-SRS resource set combination connected to the corresponding aggregation ID value.
- Method 3 (Indication of which Carriers to use for the aggregated measurement): the LMF may indicate aggregated measurement to the serving gNB/TRP 9-02 and the neighbour gNB/TRP 9-03 by configuring carriers (or serving cells) to be used for the aggregated measurement within the NRPPa MEASUREMENT REQUEST message. When carriers to be used for the aggregated measurement are indicated in the NRPPa MEASUREMENT REQUEST message received from the LMF, the serving gNB/TRP 9-02 and the neighbour gNB/TRP 9-03 may perform the aggregated measurement by using an appropriate combination (e.g., an aggregated UL-SRS resource set combination having good signal strength) of the UL-SRS resource sets aggregated in the indicated carriers among the aggregated UL-SRS resource sets included in the received UL-SRS configuration information. For reference, method 3 indicating only a carrier may give more flexibility to the serving gNB/TRP 9-02 and the neighbour gNB/TRP 9-03 in determining which aggregated UL-SRS resource set combination to use for the aggregated measurement, compared to method 2, which explicitly indicates a UL-SRS resource set combination for performing the aggregated measurement.

In operation 9-60, the serving gNB/TRP 9-02 and the neighbour gNB/TRP 9-03 may measure the SRS transmitted by the UE 9-01 (UL SRS Measurements).

The serving gNB/TRP 9-02 and the neighbour gNB/TRP 9-03 receiving the request for measuring the SRS from the LMF 9-04 through the NRPPa MEASUREMENT REQUEST message may measure the SRS transmitted by the UE 9-01, based on SRS configuration information included in the NRPPa MEASUREMENT REQUEST message. In addition, when aggregated or joint measurement is indicated in operation 9-55, the serving gNB/TRP 9-02 and the neighbour gNB/TRP 9-03 may perform aggregated or joint measurement according to the indication of the LMF 9-04.

In operation 9-65, the serving gNB/TRP 9-02 and the neighbour gNB/TRP 9-03 may transmit an NRPPa MEAUREMENT RESPONSE message to the LMF 9-04 (NRPPa MEASUREMENT RESPONSE).

The NRPPa MEASUREMENT RESPONSE message may be used to transmit, to the LMF 9-04, the result of the SRS measurement for which the request was received by the serving gNB/TRP 9-02 and the neighbour gNB/TRP 9-03 from the LMF 9-04 in operation 9-55. In addition, when the serving gNB/TRP 9-02 and the neighbour gNB/TRP 9-03 perform aggregated measurement in accordance with the indication of the LMF 9-04 in step 9-55 in operation 9-60, the serving gNB/TRP 9-02 and the neighbour gNB/TRP 9-03 may report the aggregated measurement result through the NRPPa MEASUREMENT RESPONSE message in operation 9-65. In this case, in order to inform the LMF that the measurement result included in the NRPPa MEASUREMENT RESPONSE message is a result obtained through the aggregated measurement, at least one of the following two methods may be used.
- Method 1 (using a 1-bit indicator): the serving gNB/TRP 9-02 and the neighbour gNB/TRP 9-03 may inform the LMF that the measurement result value included in the NRPPa MEASUREMENT RESPONSE message is a result value obtained through aggregated measurement by using a 1-bit indicator.
- Method 2 (existing field expansion): the serving gNB/TRP 9-02 and the neighbour gNB/TRP 9-03 may inform the LMF that the corresponding measurement result value is an aggregated measurement result by expanding an existing field (e.g., UL RTOA or gNB Rx-Tx Time Difference field in the TRP measurement result IE) for reporting the UL-SRS measurement result value.

In operation 9-70, the LMF 9-04 may transmit an NRPPa POSITIONING DEACTIVATION message to the serving gNB/TRP 9-02 (NRPPa POSITIONING DEACTIVATION).

The NRPPa POSITIONING DEACTIVATION message may be transmitted by the LMF 9-04 to the serving gNB/TRP 9-02 in order to deactivate SRS transmission requested in operation 9-35 after the LMF 6-04 has completed the location estimation technique operation.

In this case, the NRPPa POSITIONING DEACTIVATION message may include an ID of a UL-SRS resource set to be deactivated. In addition, when the serving gNB 9-02 has indicated to the UE 9-01 that two or more (e.g., two or three) UL-SRS resource sets configured in different carriers (or serving cells) have been aggregated (or linked) in operation 9-25 and information corresponding thereto has been provided to the LMF 9-04 in operation 9-30, the LMF 9-04 may include information for making a request for deactivating some (e.g., one, two, or three) of the two or more UL-SRS resource sets included in the aggregated UL-SRS resource sets in the NRPPa POSITIONING DEACTIVATION message.

In operation 9-75, the serving gNB/TRP 9-02 may configure deactivation of SRS transmission to the UE 9-01 (Deactivate UE SRS transmission).

The serving gNB/TRP 9-02 receiving the NRPPa POSITIONING DEACTIVATION REQUEST message may indicate SRS deactivation to the UE 9-40 through a MAC CE in operation 9-75. In addition, when the serving gNB 9-02 has indicated to the UE 9-01 that two or more (e.g., two or three) UL-SRS resource sets configured in different carriers (or serving cells) have been aggregated (or linked) in operation 9-25, transmission deactivation of some (e.g., one, two, or three) of the two or more UL-SRS resource sets included in the aggregated UL-SRS resource sets may be indicated to the UE through one MAC CE.. A detailed MAC CE definition and configuration method for this is described in detail in FIG. 11 and FIGS. 12A to 12C.

FIG. 10 is a diagram illustrating UL-SRS (positioning SRS) configuration information elements included in the RRCReconfiguration message 9-25 according to an embodiment of the disclosure.

The RRCReconfiguration message 10-01 may include cell group configuration information 10-10 for a master cell group (MCG) and cell group configuration information 10-20 for a secondary cell group (SCG). The configuration information (CellGroupConfig IE) 10-10 or 10-20 for each cell group may include configuration information 10-12 for one or a plurality of carriers (or cells), and each cell may be connected to a specific id (e.g., ServCellIndex). The configuration information for each cell may further include configuration information 10-13 for one or a plurality of bandwidth parts (BWPs). In addition, the configuration information for each BWP may include an ID (BWP-Id) of each BWP, and one or a plurality of UL-SRS resource set configuration information (10-14, 10-17, SRS-PosResourceSet) and one or a plurality of UL-SRS resource configuration information (SRS-PosResource). The SRS-PosResourceSet may include, in a list form, an ID (srs-PosResourceSetId) of each SRS-PosResourceSet and IDs (10-15, SRS-PosResourceId) of one or a plurality of UL-SRS resources belonging to the corresponding UL-SRS resource set, together with information elements (e.g., resource Type, periodicity, alpha, P0, pathlossReferenceRS-Pos) configured in units of resource sets.

For the UL-SRS (positioning SRS) BW aggregation operation, the serving gNB 9-02 may indicate to the UE 9-01 that specific UL-SRS resources 10-17 and 10-18 configured in different carriers (cells) among a plurality of UL-SRS resource sets (SRS-PosResourceSet) included in the RRCReconfiguration message have been aggregated. To this end, the serving gNB 9-02 may indicate whether to perform aggregation in units of UL-SRS resource sets (SRS-PosResourceSet). For example, the aggregated UL-SRS resource set combination may include 2 to 3 UL-SRS resource sets (e.g., a UL-SRS resource set 10-17 (Set-M) transmitted in a SpCell and a UL-SRS resource set 10-18 (Set-1) transmitted in one of other Scells) transmitted in different carriers (or cells). As described above, the serving gNB 9-02 may use at least one or a combination of the following methods for indicating aggregated UL-SRS resource sets among UL-SRS resource sets (SRS-PosResourceSet) included in the RRCReconfiguration message.

> Method 1-1 (including UL-SRS aggregation information at the RRCReconfiguration message level, without using an aggregation ID): a new field (e.g., SRS-PosResourceSetLinkedForAggBWInfo) for indicating an aggregated UL-SRS resource set is defined at the RRCReconfiguration message level, and the corresponding field may indicate one or a plurality of aggregated UL-SRS resource set combinations as in [Table 7] below.

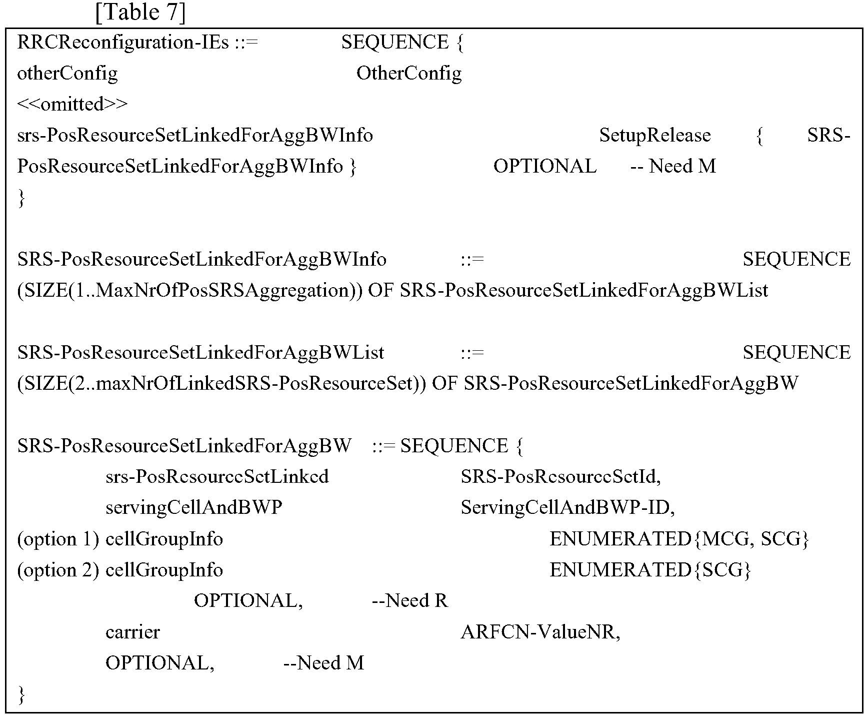

Referring to [Table 7], SRS-PosResourceSetLinkedForAggBWInfo may be a list including one or a plurality of aggregated UL-SRS resource set combinations (SRS-PosResourceSetLinkedForAggBWList) up to a maximum of MaxNrOfPosSRSAggregation.

In addition, each SRS-PosResourceSetLinkedForAggBWList may be a list including two or more (e.g., a minimum of two and a maximum of three) SRS-PosResourceSetLinkedForAggBW IEs indicating the aggregated UL-SRS resource set.

The SRS-PosResourceSetLinkedForAggBW IE may include at least one or a combination of the following fields in order to indicate each of the aggregated UL-SRS resource sets.
- srs-PosResourceSetLinked: a field indicating the ID value (SRS-PosResourceSetId) of each of the aggregated UL-SRS resource sets.
- servingCellAndBWP: the ID of the UL-SRS resource set indicated by srs-PosResourceSetLinked may be assigned a unique value for each BWP. Therefore, the servingCellAndBWP may indicate a servingCellAndBWP-ID IE which includes the ID of a serving cell and the ID of a BWP in which the corresponding UL-SRS resource set is configured, among the UL-SRS resource sets configured in RRCReconfiguration. Alternatively, the ID of the serving cell and the ID of the BWP may be included as separate IEs.
- cellGroupInfo: the serving cell ID indicated through the servingCellAndBWP may be assigned a unique value in each cell group (MCG or SCG). Therefore, a cell group in which the corresponding UL-SRS resource set is configured may be indicated among the UL-SRS resource sets configured in the RRCReconfiguration. To this end, the cellGroupInfo field may be defined as ENUMERATED {MCG, SCG} to indicate an MCG or an SCG (Option 1), or may be defined as ENUMERATED {SCG} so as to be optionally included only in a case of indicating an SCG (Option 2).
- carrier: the frequency in which the corresponding UL-SRS resource set is configured may be indicated by an absolute radio frequency channel number (AFRCN).

> Method 1-2 (including UL-SRS aggregation information at the RRCReconfiguration message level, using an aggregation ID): a new field (e.g., SRS-PosResourceSetLinkedForAggBWInfo) for indicating an aggregated UL-SRS resource set is defined at the RRCReconfiguration message level, and the corresponding field may indicate one or a plurality of aggregated UL-SRS resource set combinations (SRS-PosResourceSetAggregation) as in [Table 8] below.

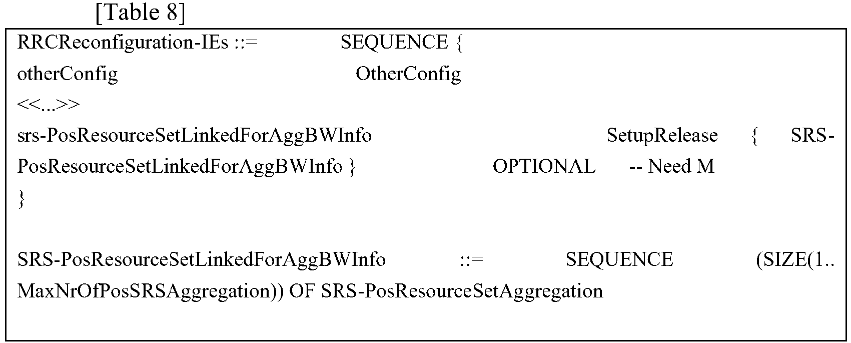

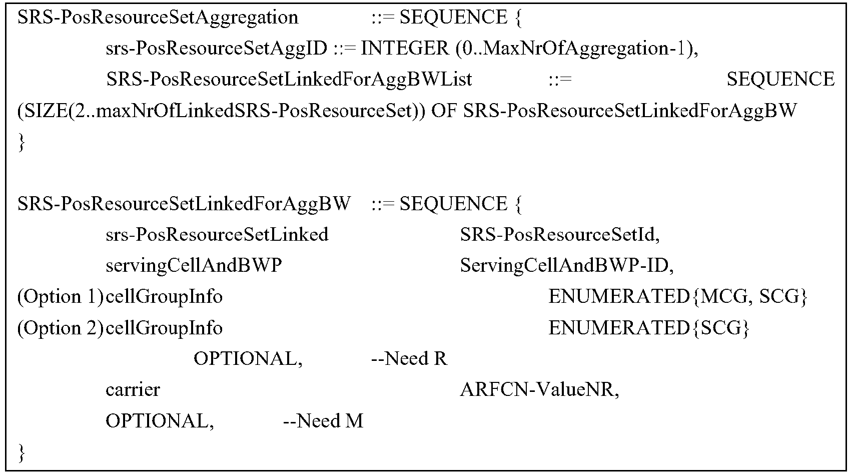

Referring to [Table 8], SRS-PosResourceSetLinkedForAggBWInfo may be a list including one or a plurality of aggregated UL-SRS resource set combinations (SRS-PosResourceSetAggregation) up to a maximum of MaxNrOfPosSRSAggregation.

In addition, each SRS-PosResourceSetAggregation IE may include a field (srs-PosResourceSetAggID) indicating an ID value connected to the corresponding aggregated UL-SRS resource set combination; and a list (SRS-PosResourceSetLinkedForAggBWList) including two or more (e.g., a minimum of two to a maximum of three) aggregated UL-SRS resource sets.

Unlike method 1-1, when an aggregation ID (srs-PosResourceSetAggID) is allocated or connected to a specific aggregated UL-SRS resource set combination as in method 1-2, the signaling load may be significantly reduced when the serving gNB 9-02 indicates, to the UE 9-01, transmission activation or deactivation of the UL-SRS ResourceSets included in the specific aggregated UL-SRS resource set combination by using a MAC CE. More specifically, in order to indicate one or a plurality of aggregated UL-SRS resource sets that are to be activated and deactivated in the MAC CE, instead of including a plurality of combinations of {serving cell ID, BWP ID, resource SET ID} associated with each UL-SRS resource set, only one aggregation ID (srs-PosResourceSetAggID) may be included. A detailed description related to the same will be described below in FIG. 11 and FIGS. 12A to 12C.

A PosResourceSetLinkedForAggBW IE included in SRS-PosResourceSetLinkedForAggBWList may include at least one or a combination of the following fields to indicate each UL-SRS resource set included in the aggregated UL-SRS resource set combination.
- srs-PosResourceSetLinked: a field indicating the ID value (SRS-PosResourceSetId) of each of the aggregated UL-SRS resource sets.
- servingCellAndBWP: the ID of the UL-SRS resource set indicated by srs-PosResourceSetLinked may be assigned a unique value for each BWP. Therefore, the servingCellAndBWP may indicate a servingCellAndBWP-ID IE which includes the ID of a serving cell and the ID of a BWP in which the corresponding UL-SRS resource set is configured, among the UL-SRS resource sets configured in RRCReconfiguration. Alternatively, the ID of the serving cell and the ID of the BWP may be included as separate IEs.
- cellGroupInfo: the serving cell ID indicated through the servingCellAndBWP may be assigned a unique value in each cell group (MCG or SCG). Therefore, a cell group in which the corresponding UL-SRS resource set is configured may be indicated among the UL-SRS resource sets configured in the RRCReconfiguration. To this end, the cellGroupInfo field may be defined as ENUMERATED {MCG, SCG} to indicate an MCG or an SCG (Option 1), or may be defined as ENUMERATED {SCG} so as to be optionally included only in a case of indicating an SCG (Option 2). - carrier: the frequency in which the corresponding UL-SRS resource set is configured may be indicated by an absolute radio frequency channel number (AFRCN).

> Method 2-1 (including UL-SRS aggregation information at the RRCReconfiguration message level, without using an aggregation ID): a new field (e.g., SRS-PosResourceSetLinkedForAggBWInfo) for indicating an aggregated UL-SRS resource set is defined at the CellgroupConfiguration IE level, and the corresponding field may indicate one or a plurality of aggregated UL-SRS resource set combinations as in [Table 9] below.

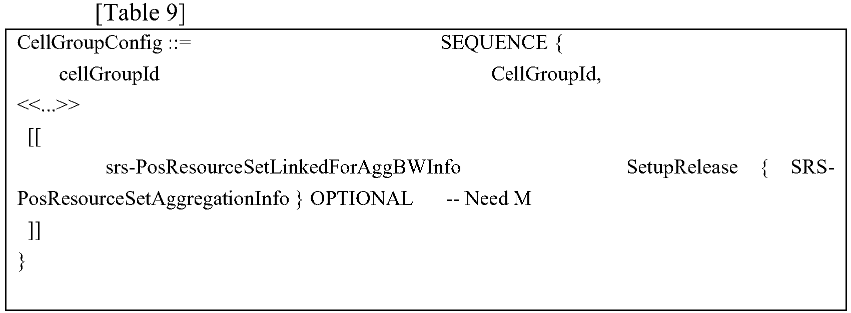

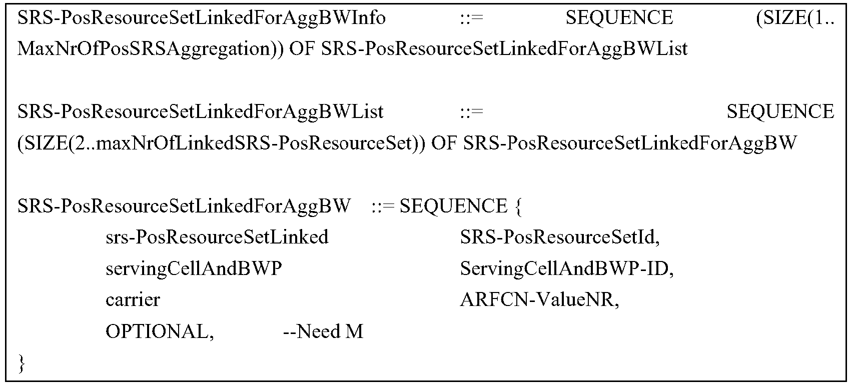

Referring to [Table 9], SRS-PosResourceSetLinkedForAggBWInfo may be a list including one or a plurality of aggregated UL-SRS resource set combinations (SRS-PosResourceSetLinkedForAggBWList) up to a maximum of MaxNrOfPosSRSAggregation.

In addition, each SRS-PosResourceSetLinkedForAggBWList may be a list including two or more (e.g., a minimum of two and a maximum of three) SRS-PosResourceSetLinkedForAggBW IEs indicating the aggregated UL-SRS ResourceSet.

The SRS-PosResourceSetLinkedForAggBW IE may include at least one or a combination of the following fields in order to indicate each of the aggregated UL-SRS resource sets.
- srs-PosResourceSetLinked: a field indicating the ID value (SRS-PosResourceSetId) of each of the aggregated UL-SRS resource sets.
- servingCellAndBWP: the ID of the UL-SRS resource set indicated by srs-PosResourceSetLinked may be assigned a unique value for each BWP. Therefore, the servingCellAndBWP may indicate a servingCellAndBWP-ID IE which includes the ID of a serving cell and the ID of a BWP in which the corresponding UL-SRS resource set is configured, among the UL-SRS resource sets configured in RRCReconfiguration. Alternatively, the ID of the serving cell and the ID of the BWP may be included as separate IEs. - carrier: the frequency in which the corresponding UL-SRS resource set is configured may be indicated by an absolute radio frequency channel number (AFRCN).

> Method 2-2 (including UL-SRS aggregation information at the CellgroupConfiguration level, using an aggregation ID): a new field (e.g., SRS-PosResourceSetLinkedForAggBWInfo) for indicating an aggregated UL-SRS resource set is defined at the CellgroupConfiguration IE level, and the corresponding field may indicate one or a plurality of aggregated UL-SRS resource set combinations (SRS-PosResourceSetAggregation) as in [Table 10] below.

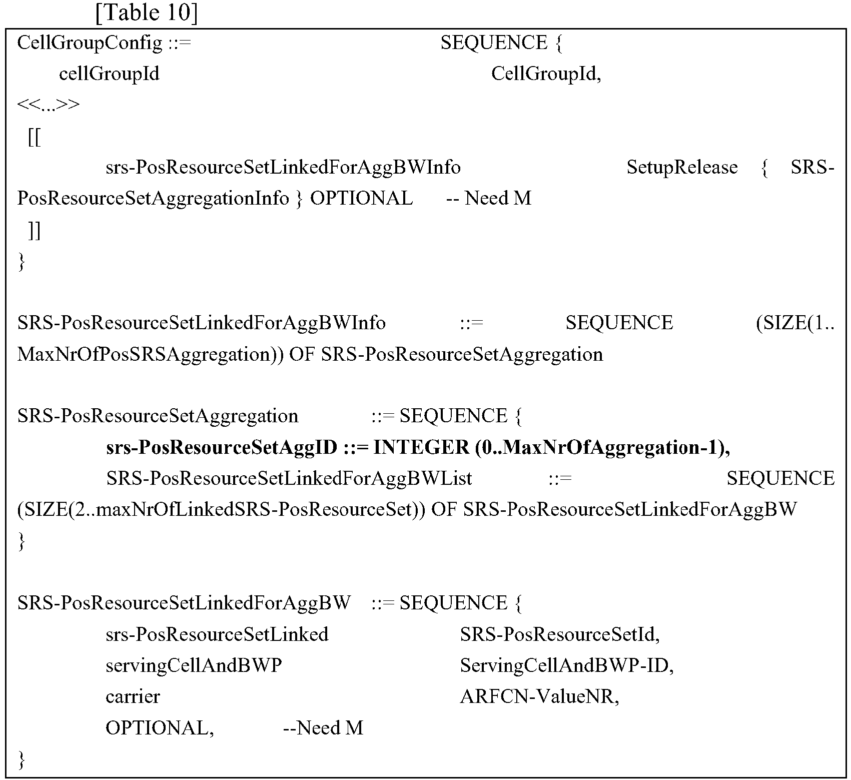

Referring to [Table 10], SRS-PosResourceSetLinkedForAggBWInfo may be a list including one or a plurality of aggregated UL-SRS resource set combinations (SRS-PosResourceSetAggregation) up to a maximum of MaxNrOfPosSRSAggregation.

In addition, each SRS-PosResourceSetAggregation IE may include a field (srs-PosResourceSetAggID) indicating an ID value connected to the corresponding aggregated UL-SRS resource set combination; and a list (SRS-PosResourceSetLinkedForAggBWList) including two or more (e.g., a minimum of two to a maximum of three) aggregated UL-SRS ResourceSet.

Unlike method 2-1, when an aggregation ID (srs-PosResourceSetAggID) is allocated or connected to a specific aggregated UL-SRS resource set combination as in method 2-2, the signaling load may be significantly reduced when the serving gNB 9-02 indicates, to the UE 9-01, transmission activation or deactivation of the UL-SRS ResourceSets included in the specific aggregated UL-SRS resource set combination by using a MAC CE. More specifically, in order to indicate one or a plurality of aggregated UL-SRS resource sets that are to be activated and deactivated in the MAC CE, instead of including a plurality of combinations of {serving cell ID, BWP ID, resource SET ID} associated with each UL-SRS resource set, only one aggregation ID (srs-PosResourceSetAggID) may be included. A detailed description related to the same will be described below in FIG. 11 and FIGS. 12A to 12C.

A PosResourceSetLinkedForAggBW IE included in SRS-PosResourceSetLinkedForAggBWList may include at least one or a combination of the following fields to indicate each UL-SRS resource set included in the aggregated UL-SRS resource set combination.
- srs-PosResourceSetLinked: a field indicating the ID value (SRS-PosResourceSetId) of each of the aggregated UL-SRS resource sets.
- servingCellAndBWP: the ID of the UL-SRS resource set indicated by srs-PosResourceSetLinked may be assigned a unique value for each BWP. Therefore, the servingCellAndBWP may indicate a servingCellAndBWP-ID IE which includes the ID of a serving cell and the ID of a BWP in which the corresponding UL-SRS resource set is configured, among the UL-SRS resource sets configured in RRCReconfiguration. Alternatively, the ID of the serving cell and the ID of the BWP may be included as separate IEs.
- carrier: the frequency in which the corresponding UL-SRS resource set is configured may be indicated by an absolute radio frequency channel number (AFRCN).

As in method 1-1 and method 1-2, when the UL-SRS aggregation information is included at the RRCReconfiguration message level, aggregation between SRS-PosResourceSets configured in different cell groups (MCG or SCG) may be supported. On the other hand, as in method 2-1 and method 2-2, when UL-SRS aggregation information is included at the cellgroupConfiguration level, a field (cellGroupInfo) for indicating a cell group in which a specific SRS-PosResourceSet is configured may not be included, thereby reducing signaling overhead.

> Method 3 (including UL-SRS aggregation information at the SRS-PosResourceSet level, using an aggregation ID):
In order to indicate the ID value of an aggregated UL-SRS resource set combination including the corresponding UL-SRS resource set at the SRS-PosResourceSet IE level, a new field (e.g., srs-PosResourceSetAggID) may be defined as in [Table 11] below.

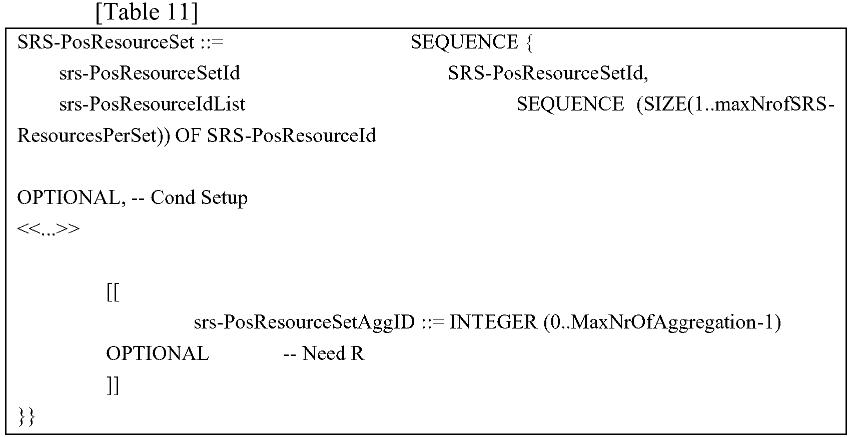

Referring to [Table 11], an aggregated UL-SRS resource set combination including a specific UL-SRS resource set (SRS-PosResourceSet) may be indicated through the srs-PosResourceSetAggID field. For example, SRS-PosResourceSet M 10-17 and SRS-PosResourceSet 1 10-18 may be indicated to be aggregated by configuring the same ID value through the srs-PosResourceSetAggID field in the SRS-PosResourceSet IE corresponding to the two sets 10-17 and 10-18.

In the embodiment of [Table 11], it is assumed that one UL-SRS resource set (SRS-PosResourceSet) is included in only one aggregation combination, and thus the srs-PosResourceSetAggID field has indicated one ID value. If one UL-SRS resource set (SRS-PosResourceSet) is included in a plurality of aggregation combinations, the srs-PosResourceSetAggID field may indicate a list of a plurality of ID values.

FIG. 11 is a diagram illustrating the configuration of aggregated UL-SRS resource sets according to an embodiment of the disclosure.

Referring to FIG. 11, a plurality of UL-SRS resource sets 11-10, 11-20, and 11-30 transmitted from different serving cells may be aggregated, and this may be explicitly configured through the RRCReconfiguration message 9-25 transmitted from the serving gNB 9-02 to the UE 9-01, as described in FIG. 9 and FIG. 10. In this case, the aggregated UL-SRS resource set combinations 11-10, 11-20, and 11-30 may be connected to separate ID values through the RRCReconfiguration message, as described in FIG. 10.

The UL-SRS resource sets 11-10, 11-20, and 11-30, included in the aggregated UL-SRS resource set combination may include a plurality of UL-SRS resources. In this case, when UL-SRS resources included in the aggregated UL-SRS resource sets 11-10, 11-20, and 11-30 explicitly configured through the RRCReconfiguration message satisfy at least one of the following conditions, the UE may implicitly determine that the corresponding UL-SRS resources have been aggregated.
- The same periodicityAndOffset and slotOffset are configured.
- Pathloss RS, Po, and alpha that ensure the same Tx PSD (power per subcarrier) are configured (same Po and alpha are configured)

According to the condition, one or a plurality of aggregated UL-SRS resource combinations among the UL-SRS resources included in the aggregated UL-SRS resource sets 11-10, 11-20, and 11-30 may be implicitly configured. In the drawing example, a case in which two aggregated UL-SRS resource combinations 11-01 and 11-02 exist is illustrated as an example.

The serving gNB may explicitly configure the aggregated UL-SRS resource set combination (11-10, 11-20, 11-30) through the RRCReconfiguration message as described above, and the UE may implicitly identify one or a plurality of aggregated UL-SRS resource combinations (11-01, 11-02) among the UL-SRS resources included in the aggregated UL-SRS resource set combination.

When the type of the UL-SRS resource sets included in the aggregated UL-SRS resource set combination is semi-persistent, the serving gNB 9-02 may transmit a MAC CE to the UE 9-01, as in operations 9-40 and 9-75 in FIG. 9, to indicate the activation or deactivation of the transmission of some (e.g., one, two, or three) of the UL-SRS resource sets included in the aggregated UL-SRS resource set combination.

In addition, when the MAC CE is used to activate the aggregated UL-SRS resource sets 11-10, 11-20, and 11-30, spatial information (information indicating a beam direction in UL-SRS transmission) may be associated with each of aggregated UL-SRS resource combinations 11-01 and 11-02 included in the corresponding aggregated SRS resource sets, respectively as indicated by reference numeral 11-05 and 11-07. The structure of the MAC CE for this purpose will be described in FIGS. 12A to 12C below.

FIGS. 12A to 12C are diagrams illustrating various structures of the MAC CE used to activate or deactivate aggregated UL-SRS resource sets according to an embodiment of the disclosure.

> Option 1 12-40 (case in which an aggregation ID is used to indicate an aggregated UL-SRS resource set combination to be activated/deactivated)
As in methods 1-2, 2-2, and 3 described in FIG. 10, when each aggregated UL-SRS resource set combination is connected to a specific aggregation ID through the RRCReconfiguration message, a positioning SRS aggregation ID 12-41 may be included in the MAC CE in order to indicate a combination to be activated or deactivated among the aggregated UL-SRS resource set combinations configured explicitly through the RRCReconfiguration message. The MAC CE having the structure of option 1 12-40 may include at least one of the following fields.

* Positioning SRS aggregation ID 12-41: may indicate an aggregated UL-SRS resource set combination to be activated or deactivated among the aggregated UL-SRS resource set combinations explicitly configured through the RRCReconfiguration message. In this case, a positioning SRS aggregation ID may be an ID value associated with each aggregated UL-SRS resource set combination, as in method 1-2, method 2-2, and method 3 of FIG. 10. Meanwhile, when only one aggregated UL-SRS resource set combination is configured through the RRCReconfiguration message, there is no need to separately indicate the combination to be activated or deactivated, and thus the positioning SRS aggregation ID may not be included.

* SET_i: the MAC CE may include 1-bit indicators (e.g., SET_0, SET_1, and SET_2) corresponding to respective UL-SRS resource sets included in the aggregated UL-SRS resource set combination indicated through the positioning SRS aggregation ID in order to indicate activation or deactivation for each of the UL-SRS resource sets. When the value of SET_i is set to 1 when the MAC CE is received, the UE may activate transmission of the UL-SRS resource set corresponding thereto. When the value of SET_i is set to 0 when the MAC CE is received, the UE may deactivate transmission of the UL-SRS resource set corresponding thereto. In this case, one of the following two methods may be used as a method of determining UL-SRS resource set corresponding to SET i among the UL-SRS resource sets included in the aggregated UL-SRS resource set combination.
- Method A (see method 1-2 and method 2-2 in FIG. 10): SET i may indicate SRS-PosResourceSet configured in an i-th entry in *SRS-PosResourceSetLinkedForAggBWList* corresponding to the indicated aggregated UL-SRS resource set combination.
- Method B (methods 1-2, 2-2, and 3 of FIG. 10): SET i may indicate an i-th PosResourceSet when SRS-PosResourceSets included in the aggregated UL-SRS resource set combination are sorted in ascending order of ServCellIndex(the index value of a serving cell in which each set is configured) corresponding to each Set.

* S: a 1-bit indicator for indicating whether beam information is additionally included in the MAC CE. When the MAC CE is used to activate some of the UL-SRS resource sets included in the aggregated UL-SRS resource set combination, the same may optionally include beam information (spatial relation) used for transmitting aggregated UL-SRS resources. For example, when S is set to 1, this may indicate that spatial relation information is included in the corresponding MAC CE, and when S is set to 0, this may indicate that spatial relation information is not included in the corresponding MAC CE. When the MAC CE is used to deactivate UL-SRS resource sets included in the aggregated UL-SRS resource set combination, beam information (spatial relation) used for transmitting aggregated UL-SRS resources may not be included, and S may be set to 0..

* Spatial Relation for (aggregated) Resource_k: beam information (spatial relation) used for transmitting aggregated UL-SRS resources. When the MAC CE is used to activate some of the UL-SRS resource sets included in the aggregated UL-SRS resource set combination and the S field is set to 1, the beam information (spatial relation) used for transmitting aggregated UL-SRS resources may be indicated through the corresponding field. When the aggregated UL-SRS resource sets to be activated are indicated through the positioning SRS aggregation ID and SET_i, the spatial relation field may indicate spatial relation information for each of aggregated UL-SRS resource combinations, which are implicitly identified by satisfaction of the conditions described in FIG. 11, among the UL-SRS resources included in the corresponding sets. In this case, one of the following two methods may be used as a method of indicating spatial relation information for each aggregated UL-SRS resource combination.
- Method A: a method of indicating spatial relation information for aggregated SRS-PosResource k. The aggregated SRS-PosResource k may indicate k-th SRS-PosResource when the aggregated SRS-PosResources are sorted in ascending order of srs-PosResourceId among SRS-PosResources included in the SRS-PosResourceSet corresponding to SET_0 (or the SET with the smallest index among the SET_i set to 1). The spatial relation information indicated for the aggregated SRS-PosResource k may be the spatial relation information of the aggregated resource combination including the SRS-PosResource k.
- Method B: a method of indicating spatial relation information for SRS-PosResource k. The SRS-PosResource k may indicate k-th SRS-PosResource when SRS-PosResources included in an SRS-PosResourceSet corresponding to SET_0 (or a SET having the smallest index among SET_i with a value of 1) are sorted in ascending order of srs-PosResourceId. The spatial relation information indicated for the SRS-PosResource k may be the spatial relation information of the aggregated resource combination including the corresponding SRS-PosResource k.

> Option 2 12-50 (case in which an aggregation ID is not used to indicate an aggregated UL-SRS resource set combination to be activated/deactivated)

In order to indicate a combination to be activated or deactivated among aggregated UL-SRS resource set combinations configured explicitly through the RRCReconfiguration message, the MAC CE may indicate one of the UL-SRS resource sets included in the corresponding combination. The MAC CE having the structure of option 2 12-50 may include at least one of the following fields.

* Positioning SRS Resource Set's Cell ID, Positioning SRS Resource Set's BWP ID, Positioning SRS Resource Set ID: the MAC CE may indicate one of the UL-SRS resource sets belonging to a corresponding combination to indicate an activated or deactivated target combination among the aggregated UL-SRS resource set combinations explicitly configured through the RRCReconfiguration message. In this case, in order to indicate the UL-SRS resource set, the ID/index of the serving cell in which the SRS-PosResourceSet is configured, the ID of the BWP in which the SRS-PosResourceSet is configured, and the ID (SRS-PosResourceSetld) of the SRS-PosResourceSet may be included in the MAC CE.

* SET_i: the MAC CE may include 1-bit indicators (e.g., SET_0, SET_1, and SET_2) corresponding to respective UL-SRS resource sets included in the indicated aggregated UL-SRS resource set combination in order to indicate activation or deactivation for each of the UL-SRS resource sets. When the value of SET_i is set to 1 when the MAC CE is received, the UE may activate transmission of the corresponding UL-SRS resource set corresponding thereto. When the value of SET_i is set to 0 when the MAC CE is received, the UE may deactivate transmission of the UL-SRS resource set corresponding thereto. In this case, one of the following two methods may be used as a method of determining UL-SRS resource set corresponding to SET i among the UL-SRS resource sets included in the aggregated UL-SRS resource set combination.
- Method A (see method 1-1 and method 2-2 in FIG. 10): SET i may indicate SRS-PosResourceSet configured in an i-th entry in *SRS-PosResourceSetLinkedForAggBWList* corresponding to the indicated aggregated UL-SRS resource set combination.
- Method B (see method 1-1 and method 2-1 in FIG. 10): SET i may indicate an i-th PosResourceSet when SRS-PosResourceSets included in the indicated aggregated UL-SRS resource set combination are sorted in ascending order of ServCellIndex (the index value of a serving cell in which each set is configured) corresponding to each Set.

* S: a 1-bit indicator to indicate whether the beam information is included in the MAC CE. When the MAC CE is used to activate some of the UL-SRS resource sets included in the aggregated UL-SRS resource set combination, the same may optionally include beam information (spatial relation) used for transmitting aggregated UL-SRS resources. For example, when S is set to 1, this may indicate that spatial relation information is included in the corresponding MAC CE, and when S is set to 0, this may indicate that spatial relation information is not included in the corresponding MAC CE. When the MAC CE is used to deactivate UL-SRS resource sets included in the aggregated UL-SRS resource set combination, beam information (spatial relation) used for transmitting aggregated UL-SRS resources may not be included, and S may be set to 0..

* C: this field indicates whether octets including a serving cell ID and a BWP ID are included in Spatial Relation for Resource_k below. When the MAC CE is used to activate some of the UL-SRS resource sets included in the aggregated UL-SRS resource set combination, the field may be set to a value of 0 or 1. For example, when the field value is 1, octets including the serving cell ID and the BWP ID may be included in Spatial Relation for Resource_k. When the field value is 0, octets including the serving cell ID and the BWP ID may not be included in Spatial Relation for Resource_k. In this case, the serving cell ID and the BWP ID corresponding to a downlink (DL) reference signal included in Spatial Relation for Resource_k may be the same as the Positioning SRS Resource Set's cell ID and the Positioning SRS Resource Set's BWP ID, respectively. When the MAC CE is used to deactivate UL-SRS resource sets included in the aggregated UL-SRS resource set combination, the field value may be set to 0.

* Spatial Relation for (aggregated) Resource_k: beam information (spatial relation) used for transmitting aggregated UL-SRS resources. When the MAC CE is used to activate some of the UL-SRS resource sets included in the aggregated UL-SRS resource set combination and the S field is set to 1, the beam information (spatial relation) used for transmitting aggregated UL-SRS resources may be indicated through the corresponding field. When the aggregated UL-SRS resource sets to be activated are indicated through the positioning SRS aggregation ID and SET_i, the spatial relation field may indicate spatial relation information for each of aggregated UL-SRS resource combinations, which are implicitly identified by satisfaction of the conditions described in FIG. 11, among the UL-SRS resources included in the corresponding sets. In this case, one of the following two methods may be used as a method of indicating spatial relation information for each aggregated UL-SRS resource combination.
- Method A: a method of indicating spatial relation information for aggregated SRS-PosResource k The aggregated SRS-PosResource k may indicate the k-th SRS-PosResource when aggregated SRS-PosResources are sorted in ascending order of srs-PosResourceId among the SRS-PosResources included in an SRS-PosResourceSet corresponding to SET_0 (or a SET having the smallest index among SET_i set to 1 or a SET indicated through the positioning SRS resource set's cell ID, the positioning SRS resource set's BWP ID, or the positioning SRS resource set ID). The spatial relation information indicated for the aggregated SRS-PosResource k may be the spatial relation information of the aggregated resource combination including the SRS-PosResource k.
- Method B: a method of indicating spatial relation information for SRS-PosResource k. The SRS-PosResource k may indicate the k-th SRS-PosResource when SRS-PosResources are sorted in ascending order of srs-PosResourceld among the SRS-PosResources included in an SRS-PosResourceSet corresponding to SET_0 (or a SET having the smallest index among SET_i set to 1 or a SET indicated through the positioning SRS resource set's cell ID, the positioning SRS resource set's BWP ID, or the positioning SRS resource set ID). The spatial relation information indicated for the SRS-PosResource k may be the spatial relation information of the aggregated resource combination including the corresponding SRS-PosResource k.

> Option 3 12-60 (case in which an aggregation ID is not used to indicate an aggregated UL-SRS resource set combination to be activated/deactivated)
: in order to indicate a combination to be activated or deactivated among the aggregated UL-SRS resource set combinations explicitly configured through the RRCReconfiguration message, the MAC CE may indicate one or more target SRS-PosResourceSets to be activated or deactivated among the UL-SRS resource sets belonging to the corresponding combination. The MAC CE having the structure of option 3 12-60 may include at least one of the following fields.

* A/D: a 1-bit indicator indicating whether the MAC CE is for activating or deactivating transmission of the aggregated UL-SRS resource sets. For example, when an A/D value is set to 1, it may indicate activation, and when an A/D value is set to 0, it may indicate deactivation.

* Positioning SRS Resource Set's Cell ID_i, Positioning SRS Resource Set's BWP ID_i, Positioning SRS Resource Set ID_i: the MAC CE may indicate one or more UL-SRS resource sets i to be activated or deactivated among the aggregated UL-SRS resource sets, which have been explicitly configured through the RRCReconfiguration message. In this case, in order to indicate each UL-SRS resource set i, the ID/index of the serving cell in which set i is configured, the ID of the BWP in which the SRS-PosResourceSet is configured, and the ID (SRS-PosResourceSetId) of the SRS-PosResourceSet may be included in the MAC CE. The MAC CE may indicate one or more (e.g., from a minimum of 1 to a maximum of 3) of UL-SRS resource sets i as a target to be activated or deactivated. Therefore, one or more (e.g., a minimum of one to a maximum of three) IDs in a combination of information for indicating a specific UL-SRS resource set (the ID/index of the serving cell, the ID of the BWP, and SRS-PosResourceSetId) may be included in the MAC CE.

* S_i: when the MAC CE is used to activate some of the UL-SRS resource sets included in the aggregated UL-SRS resource set combination, beam information (spatial relation) used for transmitting the aggregated UL-SRS resources may be optionally included. In this case, in order to indicate which UL-SRS resource set (SRS-PosResourceSet) the spatial relation for (aggregated) Resource_k is configured with reference to, a 1-bit indicator S_i corresponding to each UL-SRS resource set i may be included in the MAC CE. As described above, for each UL-SRS resource set i indicated through positioning SRS resource set's cell ID_i, positioning SRS resource set's BWP ID_i, and positioning SRS resource set ID_i, an S_i value corresponding thereto may be included. When only one of a plurality of S_i values is set to 1 and a specific S_i value of is 1, it may indicate that the spatial relation for (aggregated) Resource _k is configured based on the UL-SRS resource set i corresponding to the corresponding S_i. If a plurality of S_i values are allowed to be set to 1 and the plurality of S_i values are set to 1, it may mean that spatial relation information is indicated for each UL-SRS resource set i corresponding to each S_i.

* Spatial Relation for (aggregated) Resource_k: when the MAC CE is used to activate some of the UL-SRS resource sets included in the aggregated UL-SRS resource set combination, beam information (spatial relation) used for transmitting the aggregated UL-SRS resources may be included. When aggregated UL-SRS resource sets to be activated are indicated through the Positioning SRS Resource Set's Cell ID_i, Positioning SRS Resource Set's BWP ID_i, and Positioning SRS Resource Set ID_i, the spatial relation field may indicate spatial relation information for each of the aggregated UL-SRS resource combinations implicitly identified by satisfaction of the conditions described in FIG. 11 among the UL-SRS resources included in the corresponding sets. In this case, one of the following two methods may be used as a method of indicating spatial relation information for each aggregated UL-SRS resource combination.

Method A: a method indicating spatial relation information for aggregated SRS-PosResource k. The aggregated SRS-PosResource k may indicate the k-th SRS-PosResource when aggregated SRS-PosResources are sorted in the ascending order of srs-PosResourceId among the SRS-PosResources in the SRS-PosResourceSet corresponding to the UL-SRS resource set i (or the first indicated UL-SRS resource set 0 in the MAC CE or the UL-SRS resource set i having the lowest serving cell index) in which the S_i value is set to 1. The spatial relation information indicated for the aggregated SRS-PosResource k may be the spatial relation information of the aggregated resource combination including the SRS-PosResource k.

Method B: a method indicating spatial relation information for SRS-PosResource k. The SRS-PosResource k may indicate the k-th SRS-PosResource when SRS-PosResources in the SRS-PosResourceSet corresponding to the UL-SRS resource set i (or the first UL-SRS resource set 0 indicated in the MAC CE or the UL-SRS resource set i having the lowest serving cell index) in which the S_i value is set to 1 are sorted in ascending order of srs-PosResourceId. The spatial relation information indicated for the SRS-PosResource k may be the spatial relation information of the aggregated resource combination including the corresponding SRS-PosResource k.

The information elements included in each of the MAC CE structure options 12-40, 12-50, and 12-60 in FIGS. 12A to 12C are not limited to the combinations in the corresponding embodiments, and a combination of information elements included in different embodiments may be actually included together in the MAC CE.

Meanwhile, in the description of the embodiments in FIG. 8, FIG. 9, FIG. 10, FIG. 11, and FIGS. 12A to 12C, the term "UL-SRS resource set" may be replaced with expressions such as "positioning SRS resource set" and "SRS-PosResourceSet", and the term "UL-SRS resource" may be replaced with expressions such as "positioning SRS resource" and "SRS-PosResource", respectively. The above-described alternative expressions may have the same meaning in essence.

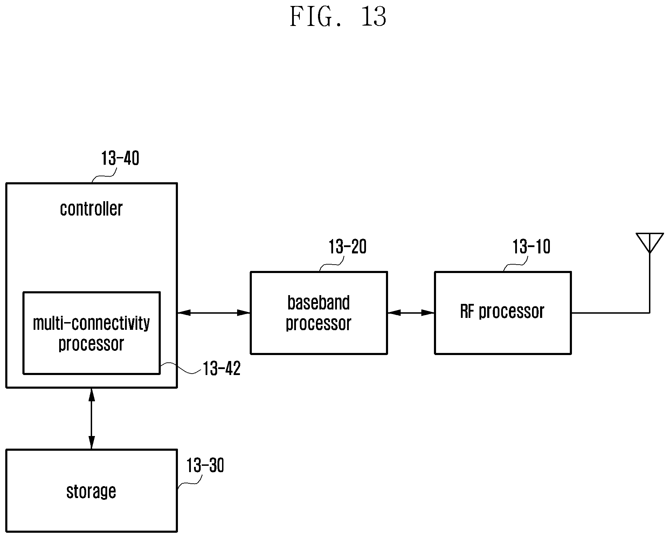

FIG. 13 illustrates a UE device according to an embodiment of the disclosure.

Referring to FIG. 13, the UE may include a radio frequency (RF) processor 13-10, a baseband processor 13-20, a storage 13-30, and a controller 13-40. The structure of the UE is not limited to the exemplary structure illustrated in FIG. 13, and the structure of the UE may include a larger or smaller number of components than those of the structure illustrated in FIG. 13.

The RF processor 13-10 may perform a function for transmitting and receiving a signal via a wireless channel, such as band conversion and amplification of the signal. That is, the RF processing unit 13-10 may up-convert a baseband signal provided from the baseband processing unit 13-20 to an RF band signal, may transmit the same through an antenna, and may down-convert an RF band signal received through the antenna to a baseband signal. For example, the RF processing unit 13-10 may include a transmission filter, a reception filter, an amplifier, a mixer, an oscillator, a digital-to-analog converter (DAC), an analog-to-digital converter (ADC), and the like, but is not limited to such examples. Although only one antenna is illustrated in FIG. 13, the UE may include multiple antennas. In addition, the RF processor 13-10 may include multiple RF chains. Furthermore, the RF processor 13-10 may perform beamforming. For the beamforming, the RF processor 13-10 may adjust the phase and magnitude of each of signals transmitted and received through multiple antennas or antenna elements. In addition, the RF processor 13-10 may perform MIMO, and may receive multiple layers when performing MIMO operations. The RF processor 13-10 may appropriately configure multiple antennas or antenna elements to perform reception beam sweeping or may adjust the direction and beam width of a reception beam so as to resonate the reception beam with a transmission beam under the control of the controller.

According to an embodiment of the disclosure, the baseband processor 13-20 may perform functions of conversion between baseband signals and bitstrings according to the system's physical layer specifications. For example, during data transmission, the baseband processor 13-20 may encode and modulate a transmitted bitstring to generate complex symbols. In addition, during data reception, the baseband processor 13-20 may demodulate and decode a baseband signal provided from the RF processor 13-10 to restore a received bitstring. For example, when following the orthogonal frequency division multiplexing (OFDM) scheme, during data transmission, the baseband processor 13-20 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 13-20 may split a baseband signal provided from the RF processor 13-10 at the OFDM symbol level, may restore signals mapped to subcarriers through a fast Fourier transform (FFT) operation, and may restore a received bitstring through demodulation and decoding.

According to an embodiment of the disclosure, the baseband processor 13-20 and the RF processor 13-10 may transmit and/or receive a signal as described above. Therefore, the baseband processor 13-20 and the RF processor 13-10 may be referred to as a transmitter, a receiver, a transceiver, or a communication unit. Furthermore, at least one of the baseband processor 13-20 and the RF processor 13-10 may include multiple communication modules to support multiple different radio access technologies. In addition, at least one of the baseband processor 13-20 and the RF processor 13-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands. The UE may transmit/receive a signal with the gNB by using the baseband processor 13-20 and the RF processor 13-10, and the signal may include control information and data.

According to an embodiment of the disclosure, the storage 13-30 may store basic programs, application programs, and data, such as configuration information, for operation of the main base station. For example, the storage 13-30 may store basic programs, application programs, and data information, such as configuration information, for the operation of the UE. In addition, the storage 13-30 may provide the stored data at the request of the controller 13-40. The storage 13-30 may be configured by a storage medium or a combination of storage media, such as a ROM, a RAM, a hard disk, a CD-ROM, and a DVD. In addition, the storage 13-30 may be configured by a plurality of memories. According to an embodiment of the disclosure, the storage 13-30 may store programs for performing the UE location estimation according to the disclosure.

The controller 13-40 may control the overall operation of the UE. For example, the controller 13-40 may transmit/receive signals through the baseband processor 13-20 and the RF processor 13-10 in order to control the operation of the UE as described above in FIGS. 1 to 12C.

In addition, the controller 13-40 records data in the storage 13-30 and reads the data from the storage 13-30. To this end, the controller 13-40 may include at least one processor. For example, the controller 13-40 may include a communication processor (CP) configured to perform control for communication, and an application processor (AP) configured to control upper layers such as application programs. In addition, according to an embodiment of the disclosure, the controller 13-40 may include a multi-connectivity processor 13-42 configured to process processes operating in a multi-connectivity mode. In addition, at least one component in the UE may be implemented as a single chip.

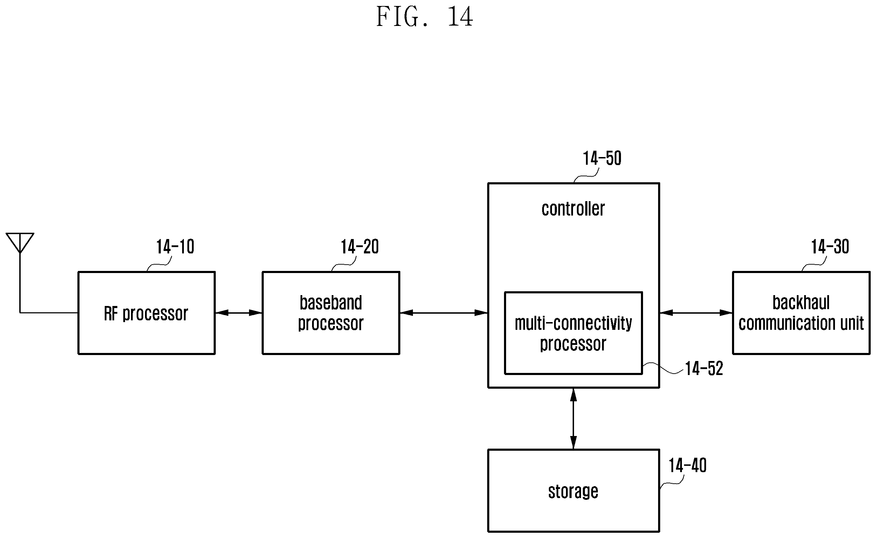

FIG. 14 illustrates a base station device according to an embodiment of the disclosure.

The base station in FIG. 14 may be included in the above-described network. Also, according to an embodiment of the disclosure, a network entity (or network function) may have the same or like structure as the base station in FIG. 14. For example, the LMF entity may have the same or like structure as the base station in FIG. 14.

As illustrated in FIG. 14, the base station may include an RF processor 14-10, a baseband processor 14-20, a backhaul communication unit 14-30, a storage 14-40, and a controller 14-50. The structure of the base station is not limited to the exemplary structure illustrated in FIG. 14, and the base station may include a larger or smaller number of components than those of the structure illustrated in FIG. 14. The RF processor 14-10 may perform a function for transmitting and receiving a signal via a wireless channel, such as band conversion and amplification of the signal. For example, the RF processor 14-10 may up-convert a baseband signal provided from the baseband processor 14-20 to an RF band signal and then transmit the same through an antenna, and may down-convert an RF band signal received through the antenna to a baseband signal. For example, the RF processor 14-10 may include a transmission filter, a reception filter, an amplifier, a mixer, an oscillator, a DAC, and an ADC. Although only one antenna is illustrated in FIG. 14, the RF processor 14-10 may include multiple antennas. In addition, the RF processor 14-10 may include multiple RF chains. Furthermore, the RF processor 14-10 may perform beamforming. For the beamforming, the RF processor 14-10 may adjust the phase and magnitude of each of signals transmitted and received through multiple antennas or antenna elements. The RF processor 14-10 may transmit one or more layers to perform a downward MIMO operation.

According to an embodiment of the disclosure, the baseband processor 14-20 may perform functions of conversion between baseband signals and bitstrings according to the system's physical layer specifications. For example, during data transmission, the baseband processor 14-20 may encode and modulate a transmitted bitstring to generate complex symbols. In addition, during data reception, the baseband processor 14-20 may demodulate and decode a baseband signal provided from the RF processor 14-10 to restore a received bitstring. For example, when following the OFDM scheme, during data transmission, the baseband processing unit 14-20 may encode and modulate a transmitted bitstring to generate complex symbols, may map the complex symbols to subcarriers, and may configure OFDM symbols through IFFT operation and CP insertion. In addition, during data reception, the baseband processor 14-20 may split a baseband signal provided from the RF processor 14-10 at the OFDM symbol level, may restore signals mapped to subcarriers through FFT operation, and may restore a received bitstring through demodulation and decoding. The baseband processor 14-20 and the RF processor 14-10 may transmit and receive signals as described above. Therefore, the baseband processor 14-20 and the RF processor 14-10 may be referred to as a transmitter, a receiver, a transceiver, a communication unit, or a wireless communication unit. The base station may transmit/receive a signal with the UE by using the baseband processor 14-20 and the RF processor 14-10, and the signal may include control information and data.

According to an embodiment of the disclosure, the backhaul communication unit 14-30 may provide an interface for communicating with other nodes in the network. For example, the backhaul communication unit 14-30 may convert bitstrings transmitted from the main base station to other nodes, for example, an auxiliary base station or a core network, to physical signals, and may convert physical signals received from the other nodes to bitstrings.

According to an embodiment of the disclosure, the storage 14-40 may store basic programs, application programs, and data, such as configuration information, for the operation of the main base station. For example, the storage 14-40 may store information regarding a bearer allocated to a connected UE, a measurement result reported from the connected UE, and the like. In addition, the storage 14-40 may store information serving as criteria for determining whether to provide or stop multi-connectivity to the UE. In addition, the storage 14-40 provides the stored data at the request of the controller 14-50. The storage 14-40 may be configured by a storage medium or a combination of storage media, such as a ROM, a RAM, a hard disk, a CD-ROM, and a DVD. In addition, the storage 14-40 may be configured by multiple memories. According to an embodiment of the disclosure, the storage 14-40 may store programs for performing the UE location estimation according to the disclosure.

The controller 14-50 may control the overall operation of the base station. For example, the controller 14-50 may transmit/receive signals through the baseband processor 14-20 and the RF processor 14-10 or through the backhaul communication unit 14-30 in order to control the operation of the base station as described above in FIGS. 1 to 12C. In addition, the controller 14-50 records data in the storage 14-40 and reads the data from the storage 14-40. To this end, the controller 14-50 may include at least one processor. In addition, according to an embodiment of the disclosure, the controller 14-50 may include a multi-connectivity processor 14-52 configured to process processes operating in a multi-connectivity mode.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory storage medium" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store ^{™}), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving a radio resource control (RRC) message including configuration information on a combination of aggregated sounding reference signal (SRS) resource sets;
receiving a medium access control-control element (MAC CE) for activating or deactivating the aggregated SRS resource sets; and
based on at least one aggregated SRS resource set activated by the MAC CE, transmitting an SRS for positioning,
wherein the MAC CE includes first information indicating the combination of the aggregated SRS resource sets and second information indicating an activated or deactivated state for each of the aggregated SRS resource sets.

2. The method of claim 1, wherein the MAC CE further includes third information indicating, in ascending order, spatial relation information on aggregated SRS resources of SRS resources within an SRS resource set that is activated first by the second information.

3. The method of claim 2, wherein the MAC CE further includes fourth information indicating whether the third information is present, and
wherein the third information is included in the MAC CE under a condition in which the MAC CE is used to activate at least one of the aggregated SRS resource sets and a value of the fourth information is set to 1.

4. The method of claim 1, wherein the configuration information includes an identifier indicating a serving cell and a bandwidth part (BWP) associated with each SRS resource set.

5. A method performed by a base station in a wireless communication system, the method comprising:
transmitting a radio resource control (RRC) message including configuration information on a combination of aggregated sounding reference signal (SRS) resource sets;
transmitting a medium access control-control element (MAC CE) for activating or deactivating the aggregated SRS resource sets; and
based on at least one aggregated SRS resource set activated by the MAC CE, receiving an SRS for positioning,
wherein the MAC CE includes first information indicating the combination of the aggregated SRS resource sets and second information indicating an activated or deactivated state for each of the aggregated SRS resource sets.

6. The method of claim 5, wherein the MAC CE further includes third information indicating, in ascending order, spatial relation information on aggregated SRS resources of SRS resources within an SRS resource set that is activated first by the second information.

7. The method of claim 6, wherein the MAC CE further includes fourth information indicating whether the third informationis present, and
wherein the third information is included in the MAC CE under a condition in which the MAC CE is used to activate at least one of the aggregated SRS resource sets and a value of the fourth information is set to 1.

8. The method of claim 6, wherein the configuration information includes an identifier indicating a serving cell and a bandwidth part (BWP) associated with each SRS resource set.

9. A terminal in a wireless communication system, the terminal comprising:
a transceiver; and
a controller configured to:
receive, via the transceiver, a radio resource control (RRC) message including configuration information on a combination of aggregated sounding reference signal (SRS) resource sets,
receive, via the transceiver, a medium access control-control element (MAC CE) for activating or deactivating the aggregated SRS resource sets, and
based on at least one aggregated SRS resource set activated by the MAC CE, transmit, via the transceiver, an SRS for positioning,
wherein the MAC CE includes first information indicating the combination of the aggregated SRS resource sets and second information indicating an activated or deactivated state for each of the aggregated SRS resource sets.

10. The terminal of claim 9, wherein the MAC CE further includes third information indicating, in ascending order, spatial relation information on aggregated SRS resources of SRS resources within an SRS resource set that is activated first by the second information.

11. The terminal of claim 10, wherein the MAC CE further includes fourth information indicating whether the third informationis present, and
wherein the third information is included in the MAC CE under a condition in which the MAC CE is used to activate at least one of the aggregated SRS resource sets and a value of the fourth information is set to 1.

12. The terminal of claim 9, wherein the configuration information includes an identifier indicating a serving cell and a bandwidth part (BWP) associated with each SRS resource set.

13. A base station in a wireless communication system, the base station comprising:
a transceiver; and
a controller configured to:
transmit, via the transceiver, a radio resource control (RRC) message including configuration information on a combination of aggregated sounding reference signal (SRS) resource sets,
transmit, via the transceiver, a medium access control-control element (MAC CE) for activating or deactivating the aggregated SRS resource sets, and
based on at least one aggregated SRS resource set activated by the MAC CE, receive, via the transceiver, an SRS for positioning,
wherein the MAC CE includes first information indicating the combination of the aggregated SRS resource sets and second information indicating an activated or deactivated state for each of the aggregated SRS resource sets.

14. The base station of claim 13, wherein the MAC CE further includes third information indicating, in ascending order, spatial relation information on aggregated SRS resources of SRS resources within an SRS resource set that is activated first by the second information and fourth information indicating whether the third informationis present, and
wherein the third information is included in the MAC CE under a condition in which the MAC CE is used to activate at least one of the aggregated SRS resource sets and a value of the fourth information is set to 1.

15. The base station of claim 13, wherein the configuration information includes an identifier indicating a serving cell and a bandwidth part (BWP) associated with each SRS resource set.
